(19) Europäisches Patentamt
European Patent Office
Office européen des brevets

(11)     EP 2 404 195 B1

(12)     EUROPÄISCHE PATENTSCHRIFT

(45) Veröffentlichungstag und Bekanntmachung des Hinweises auf die Patenterteilung:
**19.09.2018  Patentblatt 2018/38**

(21) Anmeldenummer: **10711535.4**

(22) Anmeldetag: **04.03.2010**

(51) Int Cl.:
*G01S 13/93* (2006.01)          *B60K 1/00* (2006.01)

(86) Internationale Anmeldenummer:
**PCT/DE2010/000233**

(87) Internationale Veröffentlichungsnummer:
**WO 2010/099789 (10.09.2010 Gazette 2010/36)**

(54) **VERFAHREN ZUR AUTOMATISCHEN ERKENNUNG EINES FAHRMANÖVERS EINES KRAFTFAHRZEUGS UND EIN DIESES VERFAHREN UMFASSENDES FAHRERASSISTENZSYSTEM**

METHOD FOR AUTOMATICALLY DETECTING A DRIVING MANEUVER OF A MOTOR VEHICLE AND A DRIVER ASSISTANCE SYSTEM COMPRISING SAID METHOD

PROCÉDÉ POUR LA DÉTECTION AUTOMATIQUE D'UNE MANOEUVRE DE CONDUITE D'UN VÉHICULE AUTOMOBILE ET SYSTÈME D'ASSISTANCE AU CONDUCTEUR COMPRENANT CE PROCÉDÉ

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **04.03.2009  DE 102009011222**
         **28.07.2009  EP 09009730**
         **04.08.2009  DE 102009035987**

(43) Veröffentlichungstag der Anmeldung:
**11.01.2012  Patentblatt 2012/02**

(73) Patentinhaber:
• **Continental Teves AG & Co. OHG**
  **60488 Frankfurt am Main (DE)**
• **ADC Automotive Distance Control Systems GmbH**
  **88131 Lindau (DE)**

(72) Erfinder:
• **LÜKE, Stefan**
  **61191 Rosvach vor der Höhe (DE)**

• **SCHMITT, Ken**
  **64646 Heppenheim (DE)**
• **ISERMANN, Rolf**
  **64342 Seeheim-Jugenheim (DE)**
• **HABENICHT, Stefan**
  **64380 Rossdorf (DE)**
• **HOHM, Andree**
  **63785 Obernburg (DE)**
• **MANNALE, Roman**
  **64287 Darmstadt (DE)**
• **WOJEK, Christian**
  **91578 Leutershausen (DE)**
• **WINNER, Hermann**
  **76467 Bietigheim (DE)**
• **SCHIELE, Bernt**
  **66123 Saarbrücken (DE)**

(56) Entgegenhaltungen:
JP-A- H05 342 500      JP-A- 2009 023 399
US-B1- 6 269 308        US-B1- 6 282 483
US-B1- 6 498 972

**Beschreibung**

Die Erfindung betrifft ein Verfahren zur automatischen Erkennung eines Überhohl-oder Ausweichmanövers eines Kraftfahrzeugs gemäß dem Oberbegriff des Patentanspruchs 1. Die Erfindung betrifft ferner einen Überhol- oder Ausweichassistenten zur Durchführung des erfindungsgemäßen Verfahrens gemäß Patentanspruch 12.

Die Schrift US 6,269,308 B1 offenbart ein Kollisionswarnsystem für ein Fahrzeug. Um "falsche" Warnungen, z. B. bei einem Überholvorgang zu unterdrücken, bei dem das wieder einscheren in die ursprüngliche Spur zu erwarten ist bevor eine Kollision mit dem Gegenverkehr stattfindet, wird ein Verfahren zur Erkennung eines Überholvorganges angegeben. Dieses Verfahren lehrt die Erkennung eines Ausweichmanövers in Abhängigkeit des relativen Abstandes und der relativen Geschwindigkeit zum vorausfahrenden Fahrzeug und dem Lenkwinkel des Egofahrzeugs.

Die Schrift US 6,498,972 B1 offenbart eine Methode für den Betrieb eines Pre-Crash-Erfassungssystems für ein Fahrzeug. Dazu werden die Gegenwart eines Objekts und die Bewegung des Egofahrzeugs auf einer kurzlebigen Straße erfasst. Wenn sich das Objekt in einer vorbestimmten Zone mit einer vorbestimmten relativen Geschwindigkeit und sich das Egofahrzeug auf einer kurzlebigen Straße mit einem Kurvenradius oberhalb eines Schwellwertes bewegt, werden Sicherheitsmaßnahmen eingeleitet.

Aus der DE 10 2004 018 681 A1 ist ein Verfahren zum Vermeiden von Kollisionen einer Fahrzeugs mit entgegenkommenden Fahrzeugen bekannt, bei dem aus der momentanen Geschwindigkeit und aus dessen aktuellen Abständen zu einem in gleicher Richtung fahrenden Vorausfahrzeug Fahrempfehlungen, insbesondere für einen geplanten Überholvorgang generiert werden. Etwaige entgegenkommende Fahrzeuge werden durch mindestens eine Radareinrichtung erkannt und bei der Fahrempfehlung berücksichtigt.

Ferner beschreibt die JP 2009 023399 A ein Kollisionsverhinderungsverfahren, mit welcher eine mögliche Kollision eines Egofahrzeugs mit einem entgegenkommenden Fahrzeug bestimmbar ist. Hierzu wird bei einem Überholvorgang ein Time-To-Collison-Wert zu einem entgegenkommenden Fahrzeug und Überholzeiten des ein Vorausfahrzeug überholenden Egofahrzeugs bestimmt. Aus den Vergleichsergebnissen zwischen dem Time-To-Collison-Wert und den Werten der Überholzeiten wird eine mögliche Kollision abgeleitet und entsprechende kollisionsverhindernde Maßnahmen eingeleitet.

Zudem ist aus der US 6 282 483 B1 ein Verfahren zur Adaptiven Geschwindigkeitsregelung (Adaptive Cruise Control, ACC) bekannt, bei dem Kollisionen mit vorausfahrenden Fahrzeugen dadurch verhindert werden, in dem ein vorgegebener Abstand zum vorausfahrenden Fahrzeug durch Beschleunigungs- oder Bremseingriffe automatisch eingehalten wird. Hierzu werden zunächst zu allen vorausfahrenden Fahrzeugen der Abstand sowie die Geschwindigkeit des eigenen Fahrzeugs bestimmt. Des Weiteren wird zur Optimierung des einzureichenden Abstandes auf der Basis der Geschwindigkeit des eigenen Fahrzeugs und des Abstandes zu jedem der vorausfahrenden Fahrzeuge jeweils ein Zielbeschleunigungswert bestimmt. Zudem wird auf der Basis des Zielbeschleunigungswertes ein Kollisionsrisiko hinsichtlich jedes der vorausfahrenden Fahrzeuge berechnet und jenes vorausfahrende Fahrzeug bestimmt, bei welchem ein hohes Kollisionsrisiko besteht. Mit dem für dieses Fahrzeug berechneten Zielbeschleunigungswert erfolgt eine Regelung des Abstandes zu diesem Fahrzeug durch automatische Beschleunigungs- oder Bremseingriffe.

Der Vollständigkeit halber sei noch auf die JP H05 342500 A verwiesen, welche ein Verfahren zur genauen Bestimmung des Abstandes zwischen einem Fahrzeug und einem vorausfahrenden Fahrzeug beschreibt, wenn das vorausfahrende Fahrzeug sich auf der gleichen Fahrspur befindet. Hierzu werden die Fahrspur markierende Reflektoren mittels eines optischen Sensors erfasst und hieraus der Verlauf der Fahrspur geschätzt. Anhand des geschätzten Verlaufs der Fahrspur wird entschieden, ob ein vorausfahrendes Fahrzeug auf der gleichen Fahrspur sich bewegt und gegebenenfalls der Abstand zu diesem Fahrzeug bestimmt.

Um einen Fahrer effektiv mit Fahrempfehlungen zu unterstützen ist es erforderlich, die Absicht des Fahrers zuverlässig zu erkennen, also insbesondere ein Überholmanöver und dessen Teilmanöver sowie auch den Beginn eines Überholmanövers bereits vor dem tatsächlichen Eintreten robust vorhersagen zu können.

So ist in Blaschke, C.; Schmitt, J.; Färber, B.: "Überholmanöver-Prädiktion über CAN-Bus-Daten", Automobiltechnische Zeitschrift, vol. 110, no. 11/2008, pp. 1024-1028 eine Methode zur Erkennung der Fahrerabsicht beschrieben, bei der aus den Eingangsdaten Bremsdruck, Fahrpedalstellung und Fahrgeschwindigkeit, Abstand zu einer Kreuzung und den ACC-Informationen versucht wird, mit Hilfe eines Fuzzy-Logik Ansatzes die drei Fahrerabsichten "Abbiegen", "Straße folgen" und "Überholen" zu erkennen. Nachteilig bei diesem Verfahren ist jedoch, dass zur Erkennung der Fahrerabsicht keine querdynamischen Bewegungsgrößen des Fahrzeugs verwendet werden und eine schwierige Parametrierung erforderlich ist, wobei die verwendeten Größen durch das komplexe Fuzzy-Logik-System schwierig interpretierbar sind.

Ferner ist auch aus Kretschmer, M; König, L.; Neubeck, J.; Wiedmann, J.: "Erkennung und Prädiktion des Fahrerverhaltens während eines Überholvorgangs", 2. Tagung Aktive Sicherheit durch Fahrerassistenz, Garching, 2006 eine weitere Methode zur Erkennung der Fahrerabsicht bekannt, bei der zur Erkennung eines Überholmanövers Fahrzeug- und Umfeldgrößen, wie Lenkradwinkel, Lenkwinkelgeschwindigkeit, Fahrzeuggeschwindigkeit, Längsbeschleunigung, aus GPS-Daten und digitalen Karten bestimmten Straßen-Lenkwinkel (Krümmung), Abstand und Relativgeschwindigkeit zum Vorausfahrzeug sowie Seitenversatz des Fahrzeugs verwendet werden. Nachteilig bei dieser bekannten Methode ist jedoch, dass hochgenaue GPS-Empfänger und digitale Karten erforderlich sind.

Darüber hinaus ist mit beiden zuletzt beschriebenen Methoden keine Vorhersage des Zeitpunkts des Beginns eines Überholvorganges und damit des Eintritts in den Gegenverkehrsstreifen möglich.

Aufgabe der Erfindung ist es daher, ein Verfahren zur Erkennung eines Überholmanövers oder eines Ausweichmanövers der eingangs genannten Art anzugeben, mit dem die vorgenannten Nachteile vermieden werden, das insbesondere einfach und mit wenigen Parametern durchführbar ist und mit dem dennoch die Erkennung und Vorhersage von Überholmanövern zuverlässig möglich ist. Ferner ist es Aufgabe der Erfindung, einen das erfindungsgemäße Verfahren durchführenden Überhol- oder Ausweichassistenten anzugeben, mit dem eine gute Einschätzung des Gefahrenpotentials eines erkannten oder prädizierten Überholvorganges möglich ist.

Die erstgenannte Aufgabe wird gelöst durch ein Verfahren mit den Merkmalen des Patentanspruchs 1.

Dieses erfindungsgemäße Verfahren zeichnet sich dadurch aus, dass:

    a) die Position des Kraftfahrzeugs odometrisch auf der Basis der Daten der Fahrstreifen- und/oder Fahrbahnerkennung und der Bewegungsinformationen des Kraftfahrzeugs geschätzt werden,
    b) aus den geschätzten Positionsdaten des Kraftfahrzeugs folgende Indikatorgrößen gebildet werden:

-   ein lateraler Abstandswert des Kraftfahrzeugs zu einer Fahrbahn- oder Fahrstreifenmarkierung,
-   ein Time-to-Collision-Wert bezogen auf einen Abstand zu dem Vorausfahrzeug als einem in Fahrrichtung befindlichen Objekt unter Berücksichtigung der Relativbewegung,
-   ein längsdynamischer Überhol- oder Ausweichindikator, gebildet aus der Indikatorgröße des Time-to-Collision-Wertes und einem der Stellung des Fahrpedals des Kraftfahrzeugs entsprechenden Wert, und
-   ein zeitliches Abstandsmaß zu dem Vorausfahrzeug als einem in Fahrrichtung befindlichen stehenden oder bewegten Objekt, und

    c) für diese Indikatorgrößen Schwellwerte bestimmt werden, die sowohl als Kriterien zur Erkennung von Teilmanövern eines Überhol- oder eines Ausweichvorganges, insbesondere einer Folgefahrt, eines Spurwechsels, einer Vorbeifahrt an dem stehenden oder bewegten Objekt und eines Einscherens in den Fahrstreifen des überholten Objekts als auch zur Erkennung von Übergängen zwischen diesen Teilmanövern verwendet werden.

Der Vorteil dieses erfindungsgemäßen Verfahrens liegt darin, dass die geschätzten Größen aus der Odometrie sowie die Umfelddaten bezüglich eines zu überholenden Fahrzeugs oder bezüglich einem auszuweichenden Objekt, bspw. einem Hindernis zu längs- und querdynamischen Indikatorgrößen verdichtet werden, wodurch sie leicht interpretierbar werden, insbesondere hinsichtlich der gefahrenen Manöver und der Vorhersage von Überholmanövern.

Für das erfindungsgemäße Verfahren sind längs- und querdynamische Bewegungsinformationen erforderlich, die der Odometrie zugeführt werden, wobei wenigstens eine längsdynamische Bewegungsgröße, bspw. die Fahrzeuggeschwindigkeit und/oder Fahrzeugbeschleunigung aus einer Raddrehzahl eines Fahrzeugrades bestimmbar ist. Eine querdynamische Bewegungsinformation kann mittels eines Gierratensensors und/oder eines Querbeschleunigungssensors bestimmt werden. Auch ist es möglich, eine querdynamische Bewegungsinformation ausschließlich aus der Differenz der Raddrehzahlen zwischen linken und rechten Fahrzeugrädern abzuleiten und zu bestimmen.

Zur Erkennung von Fahrmanöver wird eine gegenüber dem Stand der Technik geringere Anzahl solcher Indikatorgrößen herangezogen, wobei diese erfindungsgemäßen Indikatorgrößen den Vorteil eines geringen Parametrierungsaufwandes und eine gute Interpretierbarkeit aufweisen.

Die zu erkennenden Fahrmanöver können mittels eines Zustandsdiagramms erkannt werden, in welchem die Fahrmanöver als Zustände und die Übergänge zwischen diesen Manöverzuständen in Abhängigkeit dieser erfindungsgemäßen Indikatorgrößen modelliert werden.

Zur Bestimmung einer Folgefahrt hinter einem Vorausfahrzeug oder zur Bestimmung einer freien Fahrt dient ein zeitliches Abstandsmaß zu dem in Fahrtrichtung befindlichen stehenden oder bewegten Objekt, insbesondere dem Vorausfahrzeug sowie ein zugehöriger Schwellwert.

Gemäß einer vorteilhaften Weiterbildung der Erfindung wird eine weitere Indikatorgröße als Time-To-Line-Crossing-Wert aus den Daten der Fahrstreifen- und/oder Fahrbahnerkennung und den Bewegungsinformationen des Kraftfahrzeugs und ein zugehöriger Schwellwert als Kriterium bestimmt, wobei dieser Schwellwert zusammen mit dem Kriterium für den längsdynamischen Überholindikator zur Prädiktion des Beginns eines Überholvorganges bzw. eines Ausweichmanövers verwendet werden. Hierdurch wird frühzeitig der Beginn eines Überholmanövers erkannt und somit ist im Rahmen eines Fahrerassistenzsystems ebenfalls frühzeitig eine Situationsanalyse hinsichtlich der Gefahrenlage möglich, um ggf. den Fahrer rechtzeitig warnen zu können. Vorzugsweise wird der Schwellwert als Kriterium der Indikatorgröße des Time-To-Line-Crossing-Wertes in Abhängigkeit des längsdynamischen Überholindikators gebildet, wobei die Indikatorgröße des Time-To-Line-Crossing-Wertes die Dauer bis zu einem Überfahren bspw. der die Markierung zur Gegenspur bildenden Leitlinie angibt. Die Indikatorgröße des Time-To-Line-Crossing-Wertes wird mittels querdynamischer Bewegungsinformation des Fahrzeugs bestimmt, also bspw. mittels der Gierrate und/oder der Querbeschleunigung des Fahrzeugs, da hieraus zunächst die Fahrzeugbahnkrümmung bestimmt wird. Eine Krümmungsschätzung der Fahrzeugbahnkrümmung kann auch auf der Basis der Differenz der Raddrehzahlen des Fahrzeugs oder aus dem Lenkradwinkel geschätzt werden.

Der Fahrmanöverzustand einer Folgefahrt hinter einem bewegten Objekt, insbesondere hinter einem Vorausfahrzeug wird mit der Indikatorgröße des zeitlichen Abstandsmaßes modelliert, wobei eine Folgefahrt erkannt wird, wenn der zugehörigen Schwellwert von dieser Indikatorgröße unterschreiten wird. Im anderen Fall wird von einer freien Fahrt des Fahrzeugs ausgegangen.

Des Weiteren wird bei einer vorteilhaften Weiterbildung der Erfindung bei einem negativen Wert der Indikatorgröße des lateralen Abstandes des Fahrzeugs zu einer eine Gegenfahrbahn markierenden Leitlinie der Fahrstreifen einen Spurwechsel bzw. ein Ausscheren auf eine Nachbarspur als Teilmanöver eines Überholvorganges erkannt und daher als Beginn eines Überholvorganges interpretiert.

Ein Abbruch eines solchen Teilmanövers wird gemäß einer weiteren vorteilhaften Ausgestaltung der Erfindung erkannt, wenn auf der Basis der Daten der Bewegungsinformationen des Kraftfahrzeugs und des Abstandswertes des Kraftfahrzeugs zu dem in Fahrtrichtung befindlichen stehenden oder bewegten Objekt die Indikatorgröße des Time-to-Collision-Wertes nicht bestimmt werden kann, also bspw. das Fahrzeug abgebremst wird und dadurch das Vorausfahrzeug nicht mehr erreichbar ist, und/oder die Indikatorgröße des lateralen Abstandes des Fahrzeugs zu einer eine Gegenfahrbahn markierenden Leitlinie der Fahrstreifen positiv wird, d. h. das Fahrzeug schert wieder hinter das Vorausfahrzeug ein.

Der Teilmanöverzustand "Vorbeifahrt" wird durch einen negativen Wert des Abstandswertes des Kraftfahrzeugs zu dem in Fahrtrichtung befindlichen stehenden oder bewegtem Objekt modelliert, d. h. zutreffendenfalls wird eine Fortführung eines eingeleiteten Überholvorganges erkannt.

Aus diesem Teilmanöverzustand "Vorbeifahrt" wird ein Übergang in eine Abbruchphase eines Überholvorganges dadurch modelliert, dass die Indikatorgröße des Time-to-Collision-Wertes wieder bestimmbar ist, d. h. wenn der Fahrer während der Vorbeifahrt an einem Vorausfahrzeug einen Bremsvorgang einleitet. Ein Abbruch der Vorbeifahrt wird dann erkannt, wenn diese Indikatorgröße einen zugehörigen Schwellwert unterschreitet.

Ein Einscheren als einen Überholvorgang beendigendes Teilmanöver wird gemäß einer vorteilhaften Weiterbildung der Erfindung dann erkannt, wenn die Indikatorgröße des lateralen Abstandswerts des Fahrzeugs zu einer eine Gegenfahrbahn markierenden Leitlinie der Fahrstreifen einen positiven Wert annimmt und die Indikatorgröße des Abstandswertes des Kraftfahrzeugs zu dem überholten Objekt, insbesondere zu dem Vorausfahrzeug kleiner ist als die negative Summe aus Länge des Kraftfahrzeugs und des überholten Objekts, also bspw. der Vorausfahrzeugs.

Vorteilhafterweise wird als Indikatorgröße des lateralen Abstandswertes des Fahrzeugs zu einer eine Gegenfahrbahn markierenden Leitlinie der Fahrstreifen für die Erkennung des Einscherens der Wert des Abstandes von der vorderen rechten Ecke des Kraftfahrzeugs verwendet, während für die Erkennung eines Spurwechsels bzw. eines Ausscherens auf eine Nachbarspur der Wert des Abstandes von der vorderen linken Ecke des Kraftfahrzeugs als Indikatorgröße des lateralen Abstands zu einer Leitlinie dient.

Die zweitgenannte Aufgabe der Erfindung wird durch einen Überhol- oder Ausweichassistenten mit den Merkmalen des Patentanspruchs 12 gelöst.

Hiernach umfasst der erfindungsgemäße Überhol- oder Ausweichassistent,

- eine Umfeldsensorik zur Fahrstreifen- und Fahrbahnerkennung und zur Lokalisation von Objekten in der Umgebung des Kraftfahrzeugs,
- eine Sensor-Auswerteeinheit zur Erzeugung eines elektronischen Abbildes der Umgebung des Kraftfahrzeuges,
- eine Fahrzeugsensorik zur Erfassung dynamischer Bewegungsinformationen,
- eine Fahrmanövererkennungseinrichtung zur Durchführung des erfindungsgemäßen Verfahrens zur Erkennung sowohl von Teilmanövern eines Überhol- oder eines Ausweichvorganges, insbesondere einer Folgefahrt eines Vorausfahrzeugs, eines Spurwechsels, einer Vorbeifahrt an einem bewegten oder stehenden Objekt und eines Einscherens in den Fahrstreifen eines überholten Objekts als auch zur Erkennung von Übergängen zwischen diesen Teilmanövern,
- eine Objekttracking-Einrichtung zum Verfolgen von erkannten Fahrzeugen oder Objekten des Gegenverkehrs auf der Basis der Umfeldsensorik, und
- eine Auswerteeinrichtung zur Bewertung und Ermittlung der Durchführbarkeit der erkannten Fahrmanöver und/oder Teilmanöver hinsichtlich der erkannten Fahrzeuge und/oder Objekte des Gegenverkehrs, zur Steuerung einer Warneinrichtung zur Ausgabe von Warnungen an den Fahrer bei einem prädizierten Überholvorgang oder während einem erkannten Überholvorgang, wenn das erkannte Fahrmanöver und/oder Teilmanöver als kritisch oder nicht durchführbar bewertet wird, und/oder zur Betätigung eines oder mehrerer Stellglieder von fahrzeugrelevanten Funktionen, insbesondere Bremse und/oder Lenkung und/oder Antriebsstrang bei einer erkannten Kollisionsgefahr mit einem erkannten Fahrzeug und/oder Objekt des Gegenverkehrs.

Bei einem solchen das erfindungsgemäße Verfahren verwendenden Überhol- oder Ausweichassistenten wird bei Erkennung einer Überhol- oder Ausweichsituation fortlaufend bewertet, ob ein aus einem Folgefahrtzustand gestartetes Überholmanöver ohne Gefahr durchgeführt bzw. beendet werden kann. Ggf. wird der Fahrer gewarnt und zusätzlich bewertet, ob eine Kollision mit dem Gegenverkehr durch Abbremsen und Einscheren hinter dem Vorausfahrzeug verhindert werden kann. Zutreffendenfalls bremst das Assistenzsystem das Fahrzeug im letztmöglichen Zeitpunkt automatisch ab, so dass der Fahrer wieder hinter dem Vorausfahrzeug einscheren kann. Dabei kann die Stärke des Bremseingriffs vorzugsweise von der Fahrpedalstellung zum Zeitpunkt des Eingriffs abhängig gemacht werden.

Dabei ist es gemäß einer vorteilhaften Ausgestaltung des erfindungsgemäßen Überhol- oder Ausweichassistenten besonders vorteilhaft, wenn die Einrichtung zur Situationsanalyse zur Bestimmung einer Indikatorgröße zur Bewertung eines prädizierten oder erkannten Überholvorganges ausgebildet ist, wobei diese Indikatorgröße auf der Basis der Daten der Fahrzeugsensorik und der Objekttracking-Einrichtung zum prädizierten Zeitpunkt des Endes des prädizierten oder erkannten Überholvorganges als Time-To-Collision-Wert zum erkannten Fahrzeug und/oder Objekt des Gegenverkehrs ermittelt wird. Auf dieser Basis kann eine Überholprädiktion vorgenommen werden, derart, dass die Relativkinematik der beteiligten Fahrzeuge bis zum Ende des Überholmanövers vorausberechnet wird. Diese Indikatorgröße des Time-To-Collision-Wertes zum erkannten Fahrzeug und/oder Objekt des Gegenverkehrs kann daher bereits vor dem Überholbeginn abgeschätzt werden, wobei der zugehörige Schwellwert so bestimmt ist, dass nach dem Abschluss des Überholvorganges noch ein ausreichender Sicherheitsabstand zum Gegenverkehr bleibt. Wird dieser unterschritten, wird dem Fahrer signalisiert, dass der Gegenverkehr bereits zu nah und das Überholmanöver unterlassen bzw. abgebrochen werden sollte.

Die Warnung des Fahrers kann akustisch, bspw. auch durch Sprache, optisch oder haptisch erfolgen.

Die Erfindung wird nachfolgend unter Bezugnahme auf die Zeichnungen näher erläutert. Es zeigen:

Figur 1    eine schematische Darstellung eines Ausführungsbeispiels eines erfindungsgemäßen Fahrerassistenzsystems,

Figur 2    eine schematische Blockdarstellung eines Teilsystems des Fahrerassistenzsystems gemäß Figur 1,

Figur 3    Blockschaltbild zur Darstellung der odometrischen Bestimmung der Fahrzeugposition,

Figur 4    eine schematische Darstellung eines Fahrzeugzustandes auf einer Fahrbahn zur Erläuterung der Indikatorgrößen $LO_R$ und $LO_L$,

Figur 5    ein Blockschaltbild zur Erläuterung der Detektion eines Überholvorganges,

Figur 6    ein Zustandsdiagramm zur Bestimmung von Teilmanövern eines Überholvorganges,

Figur 7    eine schematische Darstellung eines Fahrzeugzustandes auf einer Fahrbahn zur Bestimmung einer Indikatorgröße TLC,

Figur 8    eine schematische Darstellung einer Verkehrssituation im Falle eines Überholvorganges mit Gegenverkehr,

Figur 9    eine Tabelle mit Beispielen von Überholsituationen,

Figur 10    eine schematische Darstellung einer Verkehrssituation eines Überholvorganges mit Abbruch,

Figur 11    eine schematische Darstellung einer weiteren Verkehrssituation eines Überholvorganges mit Abbruch,

Figur 12    eine schematische Darstellung einer Verkehrssituation mit Gegenverkehr zur Bestimmung der für ein Abbruchmanöver relevanten Zeitdauern, und

Figur 13    Zeitdiagramme zur Darstellung der zeitlichen Zusammenhänge hinsichtlich von Warnungen und Bremseingriffe des erfindungsgemäßen Fahrerassistenzsystems.

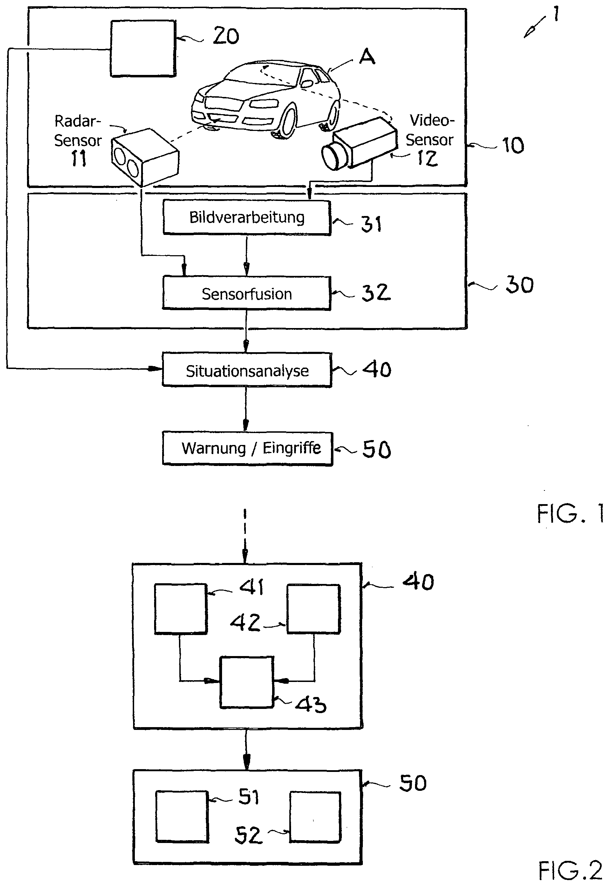

Die schematische Darstellung eines Fahrerassistenzsystems 1 gemäß Figur 1 zeigt ein Kraftfahrzeug A mit einer Umfeldsensorik 10 zur Erfassung des Fahrzeugumfeldes und eine zugehörige Fahrzeugsensorik 20 zur Erfassung fahrdynamischer Größen als auch sonstiger erforderlicher Größen, wie z. Bsp. der Stellung des Fahrpedals. Die Umfeldsensorik 10 ist mit einer Radarsensorik 11 und einer Videosensorik 12 ausgestattet, deren Daten in einer Sensorauswerteeinheit 30 zur Erzeugung eines elektronischen Abbildes der Fahrzeugumgebung erfasst und ausgewertet werden. Hierzu wird zunächst auf Basis der Videodaten der Videosensorik 12 von einer Bildverarbeitungseinheit 31 eine Objekt- und eine Freiflächenerkennung durchgeführt und anschließend in einer Sensorfusionseinheit 32 diese Informationen mit den Radardaten der Radarsensorik 11 fusioniert, so dass hieraus das elektronische Abbild der Fahrzeugumgebung erstellt werden kann.

Dem Fachmann sind die zur Erzeugung eines solchen elektronischen Abbildes erforderlichen Methoden bekannt, so dass eine prinzipielle Erläuterung ausreichend ist und daher nachfolgend auf eine detaillierte Darstellung verzichtet wird.

So ist es bspw. bekannt, dass eine pixelweise Segmentierung des Videobilds in Klassen wie Straße, Fahrzeug, Randstreifen oder Gebüsch/Wald im Nahbereich (bis etwa 50m) ein bildbasiertes Szenenverständnis und damit die Berechnung von Hindernissen und Aktionsräumen für Ausweich- und Bremsmanöver in Notfallsituationen ermöglicht. Eine detaillierte Darstellung der Bildsegmentierung ist aus "A dynamic conditional random field model for joint labeling of object and scene classes", European Conference on Computer Vision (ECCV), Marseille, 2008, p. 733-747 zu entnehmen. Für die Weiterverarbeitung in der Sensorfusionseinheit 32 stehen somit eine Segmentierung der Gesamtszene im Videobild sowie Objektdetektionen aus einem bildbasierten Objektdetektor zur Verfügung. Die beschriebene Bildsegmentierung ist optional, da jedes andere bekannte Bildauswertungsverfahren ebenso geeignet ist. Ein solche Bildsegmentierung ist besonders im Zusammenhang zur Bestimmung von Ausweichmanövern geeignet.

Zur Erkennung von Objekten des Gegenverkehrs dient die Radarsensorik 11, deren Daten mit dem bildbasierten Objektdetektor aus der Bildverarbeitungseinheit 31 in der Sensorfusionseinheit 32 fusioniert werden, um eine Objektverfolgung zu realisieren. Falls die Gierbewegung des Kraftfahrzeugs A berücksichtigt wird, ist eine kontinuierliche Objektverfolgung ohne Verlust der Objektspur möglich, da der erwartete Querversatz des Kraftfahrzeugs A berücksichtigt wird.

Das elektronische Abbild der Fahrzeugumgebung wird in einem Situationsanalyse-Modul 40 einer Situationsanalyse unterzogen, wobei hierzu auch die Daten der Fahrzeugsensorik 20 verarbeitet werden. Wird mit dieser Situationsanalyse ein aktuelles Fahrmanöver als Überholmanöver oder die entsprechende Absicht des Fahrers erkannt, wird durch Vorausberechnung des Überholmanövers eine Kollisionsgefahr mit einem erkannten entgegenkommenden Fahrzeug bewertet. In Abhängigkeit dieser Bewertung wird ein Warnungs- und Eingriffs-Modul 50 zur Ausgabe einer Warnung an den Fahrer und oder zu Ansteuerung eines Stellglieds, bspw. zur Betätigung der Bremsen des Kraftfahrzeugs A angesteuert.

Im Folgenden werden die Funktionen dieses Situationsanalyse-Modul 40 sowie des Warnungs- und Eingriffs-Modul 50 des Fahrerassistenzsystems 1 im Einzelnen im Zusammenhang mit den Figuren 2 ff dargestellt und erläutert.

Damit das Assistenzsystem 1 im Gefahrenfall durch Warnungen oder aktive Eingriffe auf einen Abbruch des Überholmanövers hinwirken kann, muss in der Situationsanalyse zum einen die Durchführung des aktuellen Fahrmanövers und zum anderen das Vorliegen einer Gefahrensituation erkannt werden.

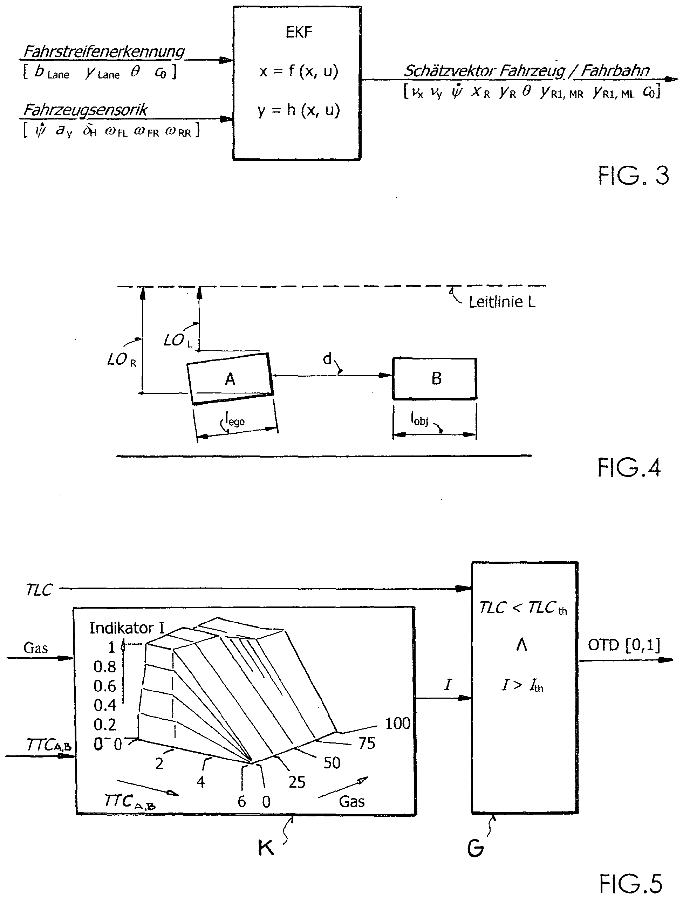

Da sich Fahrmanöver im Wesentlichen durch die Bewegung des Fahrzeugs entlang und lateral zu Fahrstreifen definieren, werden zunächst die Position, Orientierung sowie Bewegung des Fahrzeugs relativ zu diesen bestimmt. Dazu werden in einer Odometrie gemäß Figur 3 die Daten der Fahrzeugsensorik 20 und einer auf den Daten der Videosensorik basierten Fahrstreifenerkennung fusioniert.

Die Odometrie erlaubt, Position, Geschwindigkeit und Orientierung des Fahrzeugs auf der Fahrbahn sowie weitere Zustandsgrößen zu schätzen. Diese Schätzgrößen stehen der Manövererkennung, anderen Situationsanalyse-Algorithmen sowie für Regelungsaufgaben zur Verfügung.

Für die Zustandsschätzung wird ein Erweitertes Kalman-Filter EKF verwendet. Dazu werden die Dynamik des Fahrzeugs relativ zur Fahrbahn sowie die Beobachtungen der verwendeten Fahrzeug- und Umfeldsensorik 10 bzw. 20 in Zustandsdarstellung in der Form

$$\dot{x} = \mathrm{f}(\mathrm{x,u}) \quad \texttt{(Prozessmodell)},$$

$$y = \mathrm{h}(\mathrm{x,u}) \quad \texttt{(Beobachtungsmodell)}$$

modelliert und durch Kopplung eines Fahrzeug- und Fahrbahnmodells die Daten der Fahrzeugsensorik 20 und einer kamerabasierten Fahrstreifenerkennung auf der Basis der Daten der Videosensorik 12 gemäß Figur 3 fusioniert.

Die kamerabasierte Fahrstreifenerkennung liefert eine Schätzung des relativen Gierwinkels $\theta$, der Krümmung $c_0$ der Fahrbahn , die Fahrstreifenbreite $b_{Lane}$ sowie des lateralen Versatzes $y_{Lane}$ des Fahrzeugs gegenüber der Fahrstreifenmitte (Exzentrizität).

Die Fahrzeugsensorik 20 liefert die erforderliche quer- und längsdynamische Bewegungsinformation des Fahrzeugs A, gemäß Figur 3 die Größen Gierrate $\dot{\Psi}$, Lateralbeschleunigung $\alpha_y$, Radeinschlagwinkel $\delta_H$ und die vier Raddrehzahlen $\omega_{FL}$, $\omega_{FR}$, $\omega_{RL}$, $\omega_{RR}$, wobei diese Größen zu einer optimalen Schätzung des Schätzvektors des Fahrzeugs bzw. der Fahrbahn führen. Für die Funktion des erfindungsgemäßen Verfahrens reicht es, eine längsdynamische Bewegungsinformation, bspw. die Längsgeschwindigkeit aus wenigstens einer Raddrehzahl sowie ein querdynamische Bewegungsinformation, bspw. als Gierrate und/oder Querbeschleunigung zu bestimmen. Eine querdynamische Bewegungsinformation kann sowohl aus den Differenzen von Raddrehzahlen der linken und rechten Fahrzeugräder durch Schätzung als auch durch Erfassung des Lenkradwinkels eines Lenkrades des Fahrzeugs bestimmt werden.

Das im Erweiterten Kalaman-Filter EKF verwendete Beobachtungsmodell für Fahrstreifenbreite $b_{Lane}$ und Exzentrizität wird dynamisch angepasst, wenn der Bezugsfahrstreifen der Fahrstreifenerkennung wechselt. Die Auswahl der richtigen Modellgleichungen erfolgt durch Vergleich der Messgrößen *y* aus der Fahrstreifenerkennung mit den entsprechend dem Prädiktionsschritt des Erweiterten Kalaman-Filters EKF erwarteten Werten h(x*,u). Kommt es zu einem kurzzeitigen Ausfall der Fahrstreifenerkennung, werden die entsprechenden Beobachtungsmodellgleichungen weggelassen und die Schätzung wird temporär ausschließlich auf Basis von Fahrzeugsensorik fortgeführt. Dadurch gelingt eine fahrstreifenübergreifende Eigen-Lokalisation und es können kurzzeitige Ausfälle der Fahrstreifenerkennung odometrisch überbrückt werden. Als Ausgang des Erweiterten Kalaman-Filters EKF und damit der Odometrie erhält man gemäß Figur 3 eine Schätzung $\hat{X}$ des Zustandsvektors

$$\mathbf{x} = \left( v_x \ v_y \ \dot{\psi} \ x_R \ y_R \ \theta \ y_{R,M_R} \ y_{R,M_L} \ c_0 \right),$$

wobei

- $v_x$ und $v_y$ die Schwerpunktsgeschwindigkeiten in Fahrzeuglängs- und querrichtung,
- $x_R$ und $y_R$ die Position des Fahrzeugs in einem Fahrbahnkoordinatensystem,
- $\theta$ der relative Gierwinkel,
- $y_{R,M_R}$ und $y_{R,M_L}$ die lateralen Positionen der mittleren und linken Fahrstreifenmarkierung bzgl. des Fahrbahnkoordinatensystem, und
- $c_0$ die Fahrbahnkrümmung darstellen.

Basierend auf den geschätzten Größen der Odometrie sowie Umfelddaten bezüglich eines zu überholenden Fahrzeugs werden quer- und längsdynamische Indikatorgrößen gebildet. Die eigentliche Erkennung der verschiedenen Manöver erfolgt über ein Zustandsdiagramm, in dem die Übergänge zwischen den verschiedenen Manövern in Abhängigkeit der Indikatorgrößen modelliert werden.

Querdynamisch werden als zentrale Größen die laterale Position $y_R$ auf der Fahrbahn und der relative Gierwinkel $\theta$ verwendet. Unabhängig vom Fahrbahnverlauf sind diese Schätzgrößen aussagekräftig und lassen eine Detektion von Fahrstreifenwechseln zu. Als Indikatorgrößen werden gemäß Figur 4 die lateralen Abstände der Fahrzeugfront zur Leitlinie $LO_L$ und $LO_R$ gebildet, wobei $LO_L$ der Abstand der vorderen linken Ecke des Fahrzeugs A und $LO_R$ der Abstand der vorderen rechten Ecke zur Leitlinie angibt.

Um festzustellen, ob sich das Fahrzeug nur nach links bewegt, um bspw. abzubiegen, oder ob tatsächlich ein Ausscheren mit Überholabsicht vorliegt, wird zusätzlich die Längsdynamik berücksichtigt. Eine potentielle Überholsituation liegt nur vor, wenn sich vor dem eigenen Fahrzeug A ein anderes Fahrzeug B befindet. Als unabhängig von der Geschwindigkeit interpretierbares Abstandsmaß wird die Zeitlücke $\tau$ zum Vorausfahrzeug B als weitere Indikatorgröße verwendet:

$$\tau = \frac{d}{v},$$

wobei *d* der Abstand zum Vorausfahrzeug B und *v* die Fahrzeuggeschwindigkeit der Fahrzeugs A darstellt.

Auf eine beginnende Überholung deuten sowohl ein geringer Abstand d, eine hohe Relativgeschwindigkeit sowie eine hohe Relativbeschleunigung gegenüber dem Vorausfahrenden hin. Ein hoher Abstand d, eine niedrige oder gar negative Relativgeschwindigkeit und -beschleunigung machen ein Überholmanöver hingegen unwahrscheinlicher, da dieses lange dauern würde bzw. die Beibehaltung des Bewegungszustands gar nicht zum Einholen des Vorderfahrzeugs führen würde.

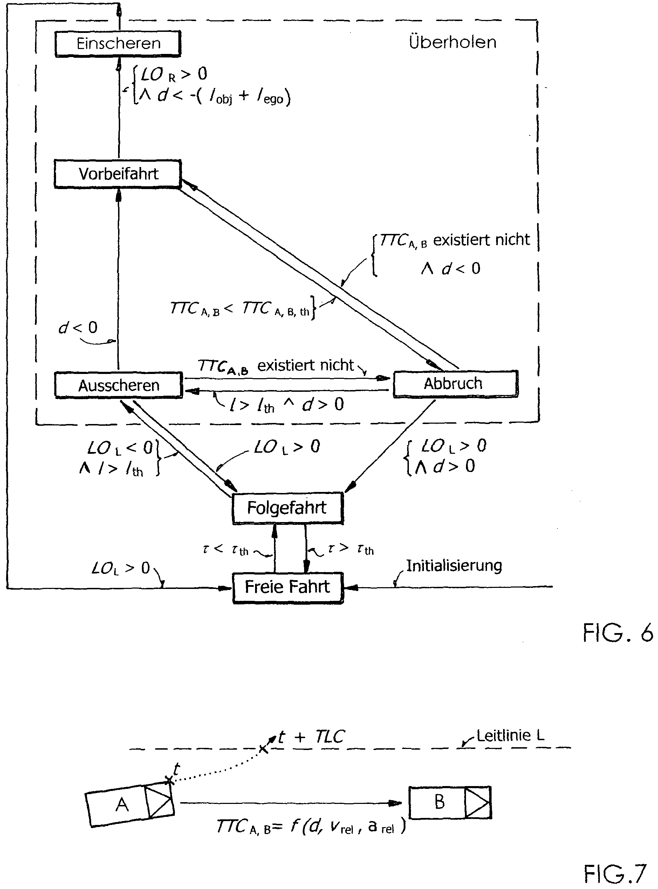

Daher dient als weiterer längsdynamischer Indikator die prädizierte Dauer eines aus der aktuellen Situation durchgeführten Überholmanövers. Da jedoch die Länge $l_{obj}$ des Vorausfahrzeugs B in einer frühen Phase eines Überholmanövers schwer abgeschätzt werden kann, wird in der Manövererkennung statt der prädizierten Überholdauer die Berechnung der Größe Time-to-Collision ($TTC_{A,B}$) verwendet (siehe Figur 7), wobei die Relativbeschleunigung $a_{rel}$ zwischen den Fahrzeugen A und B berücksichtigt wird:

$$TTC_{A,B} = \frac{2d}{v_{rel} \pm \sqrt{v_{rel} + 2da_{rel}}} \ .$$

Bei dieser Indikatorgröße $TTC_{A,B}$ werden die Größen Abstand *d,* Relativgeschwindigkeit $v_{rel}$ und Relativbeschleunigung $a_{rel}$ in einem einzigen Indikator abgebildet und trotz der Vernachlässigung der konstanten Wegelemente (Länge $l_{ego}$ und $l_{obj}$ der Fahrzeuge A und B), ist die Interpretation des Indikators nach wie vor gegeben. Die Berechnung erfolgt durchgängig und unabhängig davon, ob ein Kollisionskurs vorliegt.

Auch die Indikatorgröße $TTC_{A,B}$ gibt isoliert betrachtet noch keinen Aufschluss darüber, ob in einer Fahrsituation eine intendierte Annäherung an ein Vorausfahrzeug B vorliegt, die für einen Überholbeginn spricht. Zum einen ist es möglich, dass zwar eine Annäherung vorliegt, diese aber nicht intendiert ist, sondern aus einem Abbremsen des Vorausfahrzeugs B resultiert. Zum anderen kann es sein, dass eine Annäherung ans Vorausfahrzeug B zwar intendiert ist, das Fahrzeug A und demzufolge die Indikatorgröße $TTC_{A,B}$ aber auf Grund mangelnden Beschleunigungsvermögens nicht stark auf den Fahrerwunsch reagieren. Diese beiden Fälle werden jedoch durch Betrachtung der Fahrpedalstellung erkannt: Ist die Indikatorgröße $TTC_{A,B}$ klein, der Fahrer aber kein Gas gibt, so liegt der erste Fall vor. Zeigt die Indikatorgröße $TTC_{A,B}$ nur eine mittlere Annäherung ans Vorausfahrzeug B an, das Gaspedal aber weitgehend durchgetreten ist, liegt der zweite Fall vor. Mit derartigen Regeln lassen sich die Indikatorgröße $TTC_{A,B}$ und der Wert FPS der Fahrpedalstellung mittels Fuzzy-Logik zu einer neuen Indikatorgröße I zusammenführen, welche die Defizite einer isoliert betrachteten Indikatorgröße $TTC_{A,B}$ ausräumt. Das per Fuzzy-Logik gebildete und anschließend geglättete Kennfeld K ist in Figur 5 schematisch dargestellt.

Die nun aus den geschätzten Größen der Odometrie sowie den Umfelddaten bezüglich eines zu überholenden Fahrzeugs B abgeleiteten, verdichteten und leichter zu interpretierenden Indikatorgrößen werden dazu verwendet, die gefahrenen Manöver, also Überholmanöver und Teilmanöver, wie Ausscheren, Vorbeifahr und Einscheren zu erkennen und eine Prädiktion von Überholmanövern vorzunehmen.

Zusammenfassend werden folgende Indikatorgrößen verwendet:

$LO_R$: lateraler Abstand der Leitlinie L der Fahrstreifen zur vorderen, rechten Ecke des Fahrzeugs A,

$LO_L$: lateraler Abstand der Leitlinie L der Fahrstreifen zur vorderen, linken Ecke des Fahrzeugs A,

$d$: Abstand zum Vorausfahrzeug B

$TTC_{A,B}$: Time-To-Collision-Wert

I: Längsdynamischer Überholindikator

$\tau$: Zeitlücke zum Vorausfahrzeug B.

Die eigentliche Erkennung der verschiedenen Manöver erfolgt über ein Zustandsdiagramm gemäß Figur 6, in welchem die Manöver als Zustände und die Übergänge zwischen den Manöverzuständen in Abhängigkeit der Indikatorgrößen modelliert sind.

Nach Initialisierung mit dem Zustand "Freie Fahrt" wird der Zustand "Folgefahrt" angenommen, wenn ggf. zu einem Vorausfahrzeug B ein Zeitlücken-Schwellwert $\tau_{rt}$ unterschritten wird. Ein Überholbeginn wird mit Übergang in den Zustand "Ausscheren" detektiert, wenn anhand des linken Abstandes $LO_L$ ein Überfahren der Leitlinie L feststellbar ist und der Überholindikator I durch Überschreiten eines Schwellwertes $I_{th}$ eine Überholabsicht anzeigt. Wenn die Fahrzeugfront des Fahrzeugs A bei Fortführung der Überholung das Heck des zu überholenden Fahrzeugs B (Vorausfahrzeug) hinter sich lässt, d. h. wenn $d < 0$ ist, erfolgt der Übergang zum Teilmanöver "Vorbeifahrt". Das Teilmanöver "Einscheren" wird anschließend erkannt, wenn vollständig am überholten Vorausfahrzeug B vorbeigefahren wurde, wenn also $d <-(l_{obj}+l_{ego})$ gemäß Figur 4 gilt ($l_{obj}$ und $l_{ego}$ sind die Längen des Fahrzeugs A bzw. des Vorausfahrzeugs B), und zurück in den eigenen Fahrstreifen gewechselt wird, d. h. wenn $LO_R > 0$ gilt. Das Ende des Überholvorgangs wird durch Abschluss des Einschervorgangs mit $LO_L < 0$ erkannt, womit wieder in den Zustand "Freie Fahrt" gewechselt wird und ggf. ein Wechsel auf ein neues Bezugsfahrzeug erfolgt.

Wird das Überholmanöver während des Ausscherens oder der Vorbeifahrt abgebrochen, wird dies anhand der Indikatorgröße $TTC_{A,B}$ detektiert. Die Indikatorgröße $TTC_{A,B}$ gibt an, nach welcher Dauer die Fahrzeugfront des Fahrzeugs A bei Beibehaltung des Bewegungszustands die Höhe des Hecks des zu überholenden Vorausfahrzeugs B erreicht. Verzögert das Fahrzeug A während des Teilmanövers "Ausscheren" und es kann keine Indikatorgröße $TTC_{A,B}$ ermittelt werden, wird erkannt, dass das Vorausfahrzeug B nicht eingeholt wird, d. h. die Relativgeschwindigkeit $v_{rel}$ zu gering ist und somit ein "Abbruch" vorliegt. Anders zu interpretieren ist die Indikatorgröße $TTC_{A,B}$, wenn sich das Fahrzeug A im Zustand "Vorbeifahrt" befindet und somit bereits das Heck des zu überholenden Vorlausfahrzeugs B eingeholt wurde: Bei einer Fortführung des Überholmanövers ist die Indikatorgröße $TTC_{A,B}$ nicht mehr ermittelbar, da die Fahrzeugfront des Fahrzeugs A und das Heck des überholten Fahrzeugs B nicht mehr auf einer Höhe sind. Kann jedoch während der Vorbeifahrt die Indikatorgröße $TTC_{A,B}$ ermittelt werden, deutet dieses darauf hin, dass das Fahrzeug A verzögert. Gemäß Figur 6 wird in diesem Fall ein "Abbruch" detektiert, wenn die Indikatorgröße $TTC_{A,B}$ ermittelt werden kann und einen Grenzwert $TTC_{A,B,th}$ unterschreitet. Für den Fall, dass das Überholmanöver nach kurzem Zögern doch noch fortgesetzt wird, sind außerdem Zustandsübergänge vorgesehen, um ausgehend vom Teilmanöver "Abbruch" eine Fortführung des Überholvorgangs zu erkennen.

Um im Gefahrenfall frühzeitig unfallvermeidende Maßnahmen einleiten zu können, soll der Überholbeginn bereits vor dem Überfahren der Leitlinie L des Fahrstreifens des Fahrzeugs A vorausgesagt werden. Zu diesem Zweck wird gemäß Figur 7 als weitere Indikatorgröße die Time-To-Line-Crossing TLC gebildet, die auf Basis der aktuellen Fahrdynamik des Fahrzeugs A die Dauer bis zu einem Überfahren der Leitlinie L angibt.

Gemäß Figur 5 wird diese Indikatorgröße TLC mit dem längsdynamischen Überholindikator I logisch mit einem UND-Gatter G verknüpft, so dass bei Unterschreitung der Indikatorgröße TLS eines Schwellwertes $TLC_{th}$ und einer Überschreitung des Schwellwertes $I_{th}$ durch den längsdynamischen Überholindikator I ein Überholbeginn vorausgesagt wird, d. h. am Ausgang des Gatters G steht das Signal OTD auf logisch 1.

Um eine ausreichende Robustheit bei normalen Fahrsituationen, aber auch eine frühe Erkennung im Falle eines tatsächlichen Überholbeginns zu erreichen, wird die $TLC_{th}$-Schwelle dynamisch an die Fahrsituation angepasst. Je deutlicher der längsdynamische Überholindikator I gemäß der Kennlinie K in Figur 5 auf eine Überholung hindeutet, desto eher ist davon auszugehen, dass ein beobachtetes Zufahren auf die Leitlinie L von einem beginnenden Ausschervorgang herrührt. Daher wird der $TLC_{th}$-Schwellwert ausgehend von einem Wert umso weiter abgesenkt, je weiter der Überholindikator die Schwelle $I_{th}$ übersteigt. Die Adaption der $TLC_{th}$-Schwelle erfolgt linear, wobei die $TLC_{th}$-Schwelle ein Minimum erreicht, wenn der längsdynamische Überholindikator I maximal wird.

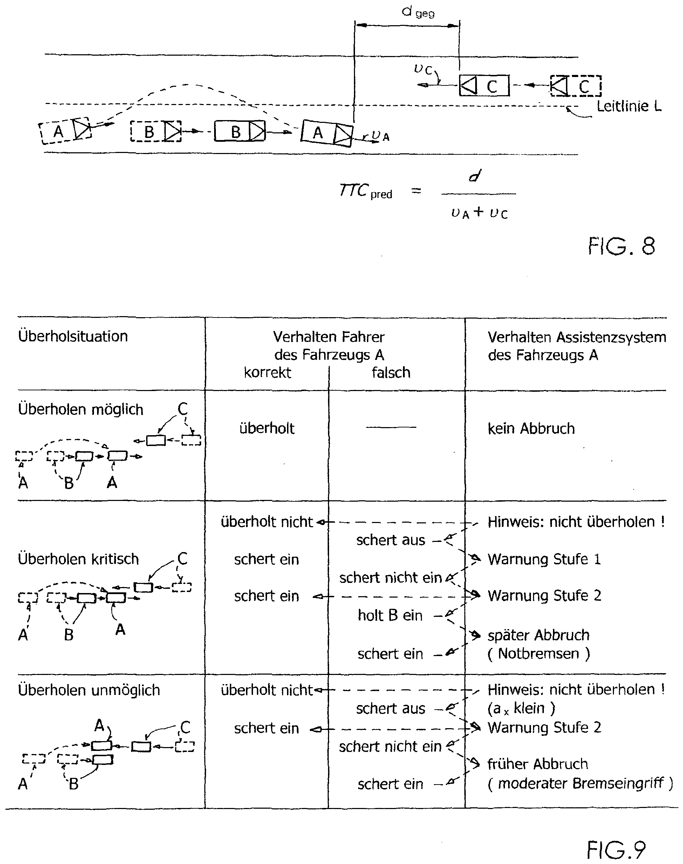

Bei Erkennung einerÜberholsituation wird fortlaufend bewertet, ob ein aus dem Zustand "Folgefahrt" gestartetes oder bereits begonnenes Überholmanöver ohne Gefahr durchgeführt bzw. beendet werden kann. Dazu wird basierend auf einem Modell des Beschleunigungsverhaltens eine Überholprädiktion vorgenommen und die Relativkinematik der beteiligten Fahrzeuge A und B (siehe Figur 8) bis zum Ende des Überholmanövers vorausberechnet. Wurde ein Überholmanöver bereits gestartet, wird dabei das wirkliche Beschleunigungsverhalten des Fahrzeugs A berücksichtigt.

Für den Zeitpunkt des vollständigen Verlassens des linken Fahrstreifens bei Überhol-Ende wird gemäß Figur 8 die Time-To-Collision $TTC_{pred}$ zum Gegenverkehr, hier dargestellt durch ein Fahrzeug C mit der Formel

$$TTC_{pred} = \frac{d_{geg}}{v_A + v_C}$$

abgeschätzt, wobei $d_{geg}$ der Abstand zum entgegenkommenden Fahrzeug C, $v_A$ die Geschwindigkeit des überholenden Fahrzeugs A und $v_C$ die Geschwindigkeit des entgegenkommenden Fahrzeugs C ist.

Diese Größe $TTC_{pred}$ spiegelt die Abstandsreserve zum Gegenverkehr am Ende der Überholung wieder und ist als Zeitmaß gut interpretierbar.

Durch die prädizierte $TTC_{pred}$ kann bereits vor oder während des Überholbeginns abgeschätzt werden, ob beim Abschluss des Überholvorganges ein ausreichender Sicherheitsabstand d zum Gegenverkehr verbleiben wird. Unterschreitet sie einen Schwellwert $TTC_{pred,th}$, ist der Gegenverkehr bereits zu nah und das Überholmanöver sollte unterlassen bzw. abgebrochen werden.

Bei dem Fahrerassistenzsystem 1 gemäß den Figuren 1 und 2 wird die Fahrmanövererkennung in einer Fahrmanövererkennungseinrichtung 41 und die Objektverfolgung, bspw. des Fahrzeugs C mittels einer Objekttracking-Einrichtung 42 des Situationsanalyse-Moduls 40 durchgeführt. Die Situationsinterpretation führt eine Auswerteeinrichtung 43 des Situationsanalyse-Moduls 40 durch.

Sobald die Auswerteeinrichtung 43 ein gefährliches Überholmanöver meldet, informiert das Fahrerassistenzsystem 1 den Fahrer mittels einer von der Auswerteeinrichtung 43 angesteuerten Warneinrichtung 51, wobei die Warnung optisch, akustisch und/oder haptisch realisiert werden kann, gleichzeitig beginnt das Fahrerassistenzsystem mit der Planung eines unfallvermeidenden Abbruchmanövers. Je nach Entfernung und Relativgeschwindigkeit des entgegenkommenden Fahrzeugs C bei Überholbeginn ist ein frühes oder spätes Abbruchmanöver erforderlich.

Die Tabelle gemäß Figur 9 zeigt hierzu drei Beispiele für Überholsituationen; nämlich eine Überholsituation ohne Abbruch und jeweils eine Überholsituation mit einem frühen bzw. späten Abbruch.

Im ersten Fall ist ein Überholen möglich, wenn der Wert der Indikatorgröße $TTC_{pred}$ größer als der zugehörige Schwellwert $TTC_{pred,th}$ ist, so dass ein Überholvorgang gefahrlos beendet werden kann.

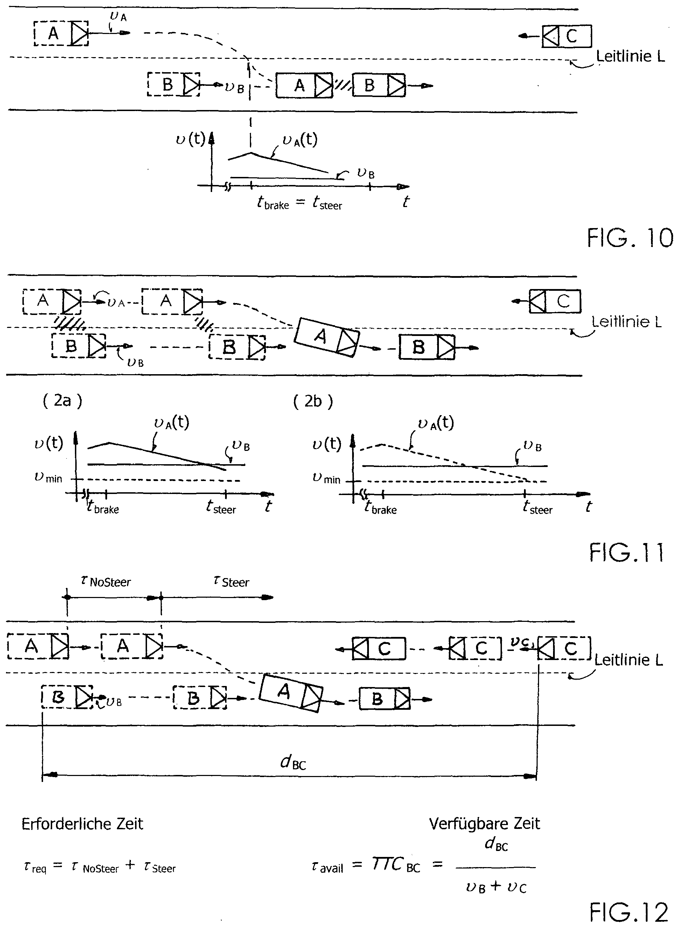

Die Situationen der beiden anderen Fälle sind in den Figuren 10 und 11 dargestellt, in denen jeweils für die Indikatorgröße $TTC_{pred}$:

$$TTC_{pred} \quad < \quad TTC_{pred,th}$$

gilt, also ein Überholen kritisch bzw. aufgrund der zu erwartenden Distanz zum entgegenkommenden Fahrzeug nicht möglich ist und ein Zurückfallen hinter das Vorausfahrzeug B erforderlich ist.

Wird ein solcher Fall vom Situationsanalyse-Modul 40 erkannt, wird mit konstanter Verzögerung unter die Geschwindigkeit des Vorausfahrzeugs herabgebremst, jedoch nur bis zu einer Mindestgeschwindigkeit, um ein dynamisches Zurücklenken zu ermöglichen.

Hierzu steuert die Auswerteeinheit 43 des Situationsanalyse-Modul 40 ein Stellglied 52 eines Bremssystems des Fahrzeugs A an, um einen Bremsvorgang auszulösen und den Fahrer dadurch zu veranlassen, wieder hinter das Vorausfahrzeug B einzuscheren. Bei zunehmender Kritikalität des Überholvorganges sind gestufte Warnungen, bspw. Stufe 1, Stufe 2, usw. bis zu einem Abbruch durch einen vom Warn- und Eingriffsmodul 50 ausgelösten Bremseingriff vorgesehen.

Figur 10 zeigt die Situation eines frühen Abbruchs, in der ein direktes Einscheren des Fahrzeugs A hinter das Vorausfahrzeug B möglich ist, sobald sich die Geschwindigkeit $v_A$ des Fahrzeugs A durch einen von der Auswerteeinheit 43 ausgelösten Bremsvorgang zum Zeitpunkt $t_{brake}$ der Geschwindigkeit des Vorausfahrzeugs B angeglichen hat, wobei zum gleichen Zeitpunkt $t_{steer}$ auch das Zurücklenken in den Fahrstreifen hinter das Vorausfahrzeug B beginnt.

Das Fahrzeug A gemäß Figur 11 befindet sich bereits im Zustand der Vorbeifahrt an dem Vorausfahrzeug B, so dass das Fahrzeug A erst so weit herabgebremst werden muss, bis es hinter das Vorausfahrzeug B zurückgefallen ist, um dann zum Zeitpunkt $t_{steer}$ wieder einscheren zu können, wie dies in dem Diagramm 2a gemäß Figur 11 dargestellt ist.

Gemäß Diagramm 2b der Figur 11 wird das Fahrzeug dagegen lediglich bis auf eine Geschwindigkeit

$v_{min}$ herabgebremst, so dass es länger dauert, bis im Zeitpunkt $t_{steer}$ auf den Fahrstreifen hinter das Vorausfahrzeug B zurückgelenkt werden kann.

Aus den aktuellen Abständen und Geschwindigkeiten der Fahrzeuge A und B wird sowohl die erforderliche Zeit $\tau_{req}$ als auch die verfügbare Zeit $\tau_{avail}$ für ein unfallvermeidendes Abbruchmanöver berechnet. Die erforderliche Zeit ist die Zeit, die (voraussichtlich) vergeht, bis das Fahrzeug A den linken Fahrstreifen wieder verlassen hat und wieder auf den rechten Fahrstreifen hinter das Vorausfahrzeug B eingeschert ist. Muss allerdings das überholende Fahrzeug A vor dem Zurücklenken erst hinter das Vorausfahrzeug B zurückfallen, verlängert sich die erforderliche Zeit entsprechend. Um diese Zeitdauer auch dann bestimmen zu können, wenn das Vorausfahrzeug B bereits den Erfassungsbereich der nach vorne gerichteten Umfeldsensorik 10 verlassen hat, wird das Fahrzeug A gemäß dem Verfahren zur Erkennung eines Fahrmanövers modellbasiert weitergeführt. Die verfügbare Zeit $\tau_{avail}$ ist die Zeit, die voraussichtlich bis zum Eintreffen des Gegenfahrzeugs C am Heck des Vorausfahrzeugs B vergeht, wie dies in Figur 12 veranschaulicht ist, die eine abgebrochene Überholsituation darstellt.

Hiernach beträgt die erforderliche Zeit für einen Überholabbruch $\tau_{req}$:

$$\tau_{req} = \tau_{NoSteer} + \tau_{Steer},$$

wobei $\tau_{NoSteer}$ die Zeitdauer der Rückfallzeit des Fahrzeugs A, also die Zeit des es auf der Überholspur benötigt, bis es hinter das Vorausfahrzeug B zurückgefallen ist, um danach wieder einzuscheren, und $\tau_{Steer}$ die Dauer des Zurücklenkens auf den Fahrstreifen des Vorausfahrzeugs B angibt, wobei für den letzten Wert $\tau_{Steer}$ ein konstanter Wert von bspw. 3 s angenommen wird.

Die verfügbare Zeitdauer für den Überholabbruch ergibt sich aus den Größen des Abstand $d_{BC}$ der Vorderfront des entgegenkommenden Fahrzeugs C bis zum Heck des Vorausfahrzeugs B und den Geschwindigkeiten $v_B$ und $v_C$ der Fahrzeuge B bzw. C und wird als Time-To-Collision-Wert $TTC_{BC}$ folgendermaßen berechnet:

$$TTC_{BC} = \frac{d_{BC}}{v_B + v_C}.$$

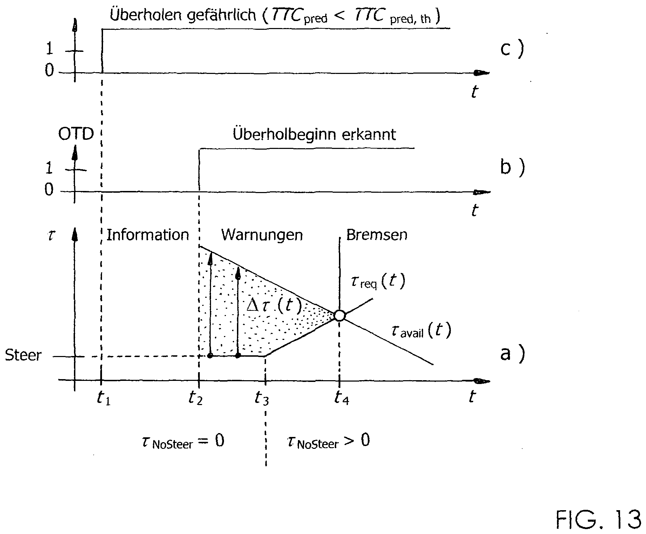

Als Basis für den Ablauf der Fahrerunterstützung wird die Differenz zwischen der voraussichtlichen Dauer eines Überholabbruchs $\tau_{req}$ und der hierfür verfügbaren Zeit $\tau_{avail}$ verwendet. Diese Differenz $\Delta\tau_{dif} = \tau_{avail} - \tau_{req}$ löst über Schwellwerte $\tau_{diff,th,i}$ ($i = 1, 2, ...$) gestufte Warnungen bis hin zum unfallvermeidenden Bremseingriff aus, wie dies in Figur 13 dargestellt ist.

Gemäß dieser Figur 13 zeigt das $t$-$\tau$-Diagramm a) den Zusammenhang zwischen dem Verlauf der Zeitdifferenz zwischen der notwendigen Dauer $\tau_{req}$ für einen Überhol-Abbruch und der hierfür verfügbaren Dauer $\tau_{avail}$ sowie die zeitliche Koordination von Informationen an den Fahrer, Warnungen und Bremseingriffe.

Das $t$-OTD-Diagramm b) zeigt das Erkennen eines Überholvorganges an, wobei der OTD-Wert aus einer UND-Verknüpfung der Indikatorgröße I und dem Indikator TLC gemäß Figur 5 erzeugt wird.

Das letzte Diagramm c) zeigt den Zeitpunkt $t_1$ an, ab dem durch Auswertung des Indikators $TTC_{pred}$ ein Überholvorgang gefährlich werden könnte, wenn der zeitliche Sicherheitsabstand am Ende des Überholvorganges, der durch diesen Indikator $TTC_{pred}$ angegeben wird, unter einen zugehörigen Schwellwert $TTC_{pred,th}$ fällt.

Zum Zeitpunkt $t_2$ wird von der Auswerteinrichtung 43 des Situationsanalyse-Moduls 40 des Fahrerassistenzsystems 1 gemäß Figur 1 der Beginn eines Überholvorgang erkannt, wobei gleichzeitig durch diese Auswerteinrichtung 43 die erforderliche und die verfügbare Zeit $\tau_{req}$ bzw. $\tau_{avail}$ als auch die Zeitdifferenz $\Delta\tau_{dif}(t)$ in Abhängigkeit der Zeit t berechnet werden. Zu diesem Zeitpunkt $t_2$ wäre keine Zeitdauer ($\tau_{NoSteer} = 0$) erforderlich, um auf den Fahrstreifen hinter das Vorausfahrzeug B wieder einzuscheren, da ein zu diesem Zeitpunkt ausgelöster Bremsvorgang verhindern würde, dass der Zustand Vorbeifahrt von dem Fahrzeug Anspruch erreicht wird.

Während vor dem Zeitpunkt $t_2$ lediglich eine Information, bspw. optisch über die Gefährlichkeit eines Überholvorganges mittels der Warneinrichtung 51 des Assistenzsystems 1 gemäß Figur 1 erfolgt, kann ab dem Zeitpunkt $t_2$ zusätzlich auch akustisch und/oder haptisch mit zunehmender Intensität gewarnt werden, bis zu dem zuletzt möglichen Abbruchzeitpunkt $t_4$, in dem ein automatischer Bremsvorgang eingeleitet wird.

Im Zeitpunkt t3 würde ein Bremsvorgang nicht verhindern, dass der Zustand Vorbeifahrt von dem Fahrzeug A erreicht wird, so dass durch Bremsen dieses Fahrzeug A erst hinter das Vorausfahrzeug B zurückfallen muss, d. h. es ist $\tau_{NoSteer} > 0$. Aufgrund dieses erforderlichen Abbremsens nimmt auch die Zeitdauer $\tau_{req}$ zu.

Das Fahrerassistenzsystem 1 gemäß Figur 1, das zur Erkennung von Fahrmanövern, insbesondere von Überholvorgängen und deren Teilmanöver, wie Ausscheren, Vorbeifahrt und Einscheren ausgebildet ist, kann mit Vorteil auch dazu eingesetzt werden, stehende Objekte, wie bspw. am Fahrbahnrand stehende Fahrzeuge auszuweichen, wobei dabei ebenfalls bei entgegenkommenden Fahrzeugen gewarnt wird, bzw. vor Erreichen des stehenden Objekts automatisch abgebremst wird.

Auch im niedrigen Geschwindigkeitsbereich ist das erfindungsgemäße Assistenzsystem vorteilhaft einsetzbar, da dort bspw. in verkehrsberuhigten Straßenabschnitten feststehende Objekte, wie Hindernisse, das können Poller oder Blumenkübel und dgl. sein, ebenfalls umfahren werden müssen und dabei bei entgegenkommendem Verkehr, also andere Fahrzeuge, Radfahrer und Fußgänger gewarnt bzw. eine automatische Bremsung erfolgt, wodurch insbesondere ein wirksamer Fußgängerschutz realisiert werden kann.

Bezugszeichen

| 1 | Fahrerassistenzsystem |
|---|---|
| 10 | Umfeldsensorik |
| 11 | Radarsensorik |
| 12 | Videosensorik |
| 20 | Fahrzeugsensorik |
| 30 | Sensor-Auswerteeinheit |
| 31 | Bildverarbeitungseinheit |
| 32 | Sensorfusionseinheit |
| 40 | Situationsanalyse-Modul |
| 41 | Fahrmanövererkennungseinrichtung |
| 42 | Objekttracking-Einrichtung |
| 43 | Auswerteeinrichtung |
| 50 | Warnungs- und Eingriffs-Modul |
| 51 | Warnsystem |
| 52 | Stellglied für ein Bremssystem |

| A | Fahrzeug mit Fahrerassistenzsystem 1 |
|---|---|
| B | Vorausfahrzeug |
| C | Fahrzeug des Gegenverkehrs |

| EKF | Odometrie |
|---|---|
| G | UND-Gatter |
| K | Kennfeld zur Bestimmung der Indikatorgröße I |
| L | Fahrstreifenbegrenzung, Leitlinie |

**Patentansprüche**

1. Verfahren zu einer automatischen Erkennung eines Überholmanövers oder eines Ausweichmanövers eines Kraftfahrzeugs (A), bei dem

- ein Fahrzeugumfeld erfasst und hiervon ein elektronisches Abbild erzeugt wird,
- das elektronische Abbild zur Erkennung eines Fahrstreifens und/oder einer Fahrbahn sowie von einem Vorausfahrzeug (B) und einem entgegenkommenden Fahrzeug (C) als Objekte (B, C) in der Fahrzeugumgebung verwendet wird, und
- längs- und querdynamische Bewegungsinformationen ($\overset{\&}{\Psi}$, $\alpha_y$, $\delta_H$, $\omega_{FL}$, $\omega_{FR}$, $\omega_{RL}$, $\omega_{RR}$) des Kraftfahrzeugs (A) bestimmt werden,

**dadurch gekennzeichnet, dass**

a) die Position ($\hat{X}$) des Kraftfahrzeugs (A) odometrisch auf der Basis der Daten ($b_{Lane}$, $y_{Lane}$, $\theta$, $c_0$) der Fahrstreifen- und/oder Fahrbahnerkennung und der Bewegungsinformationen ($\overset{\&}{\Psi}$, $\alpha_y$, $\delta_H$, $\omega_{FL}$, $\omega_{FR}$, $\omega_{RL}$, $\omega_{RR}$) des Kraftfahrzeugs (A) geschätzt werden,
b) aus den geschätzten Positionsdaten ($\hat{X}$) des Kraftfahrzeugs (A) folgende Indikatorgrößen gebildet werden:

- ein lateraler Abstandswert ($LO_L$, $LO_R$) des Kraftfahrzeugs (A) zu einer Fahrbahn- oder Fahrstreifenmarkierung (L),
- ein Time-to-Collision-Wert ($TTC_{A,B}$) bezogen auf einen Abstand ($d$) zu dem Vorausfahrzeug (B) als einem in Fahrrichtung befindlichen Objekt (B) unter Berücksichtigung der Relativbeschleunigung ($\alpha_{rel}$),
- ein längsdynamischer Überhol- oder Ausweichindikator (I), gebildet aus der Indikatorgröße ($TTC_{A,B}$) des Time-to-Collision-Wertes und einem der Stellung (FPS) des Fahrpedals des Kraftfahrzeugs (A) entsprechenden Wert, und
- ein zeitliches Abstandsmaß ($\tau$) als Quotient aus dem Abstand($d$) zum Vorausfahrzeug (B) als einem in Fahrtrichtung befindlichen stehenden oder bewegten Objekt (B) und der Geschwindigkeit ($v$) des Kraftfahrzeugs (A), und

c) für diese Indikatorgrößen ($LO_L$, $LO_R$, $TTC_{A,B}$, I, $\tau$) Schwellwerte ($I_{th}$, $TTC_{A,B,th}$, $\tau_{th}$) bestimmt werden, die als Kriterien sowohl zur Erkennung von Teilmanövern eines Überhol- oder eines Ausweichvorganges, insbesondere einer Folgefahrt, eines Spurwechsels, einer Vorbeifahrt an dem stehenden oder bewegten Objekt (B) und eines Einscherens in den Fahrstreifen des überholten Objekts (B) als auch zur Erkennung von Übergängen zwischen diesen Teilmanövern verwendet werden.

2. Verfahren nach Anspruch 1,
**dadurch gekennzeichnet, dass**
eine weitere Indikatorgröße (*TLC*) als Time-to-Line-Crossing-Wert aus den Daten ($b_{Lane}$, $Y_{Lane}$, $\theta$, $c_0$) der Fahrbahn- und/oder Fahrbahnerkennung und den Bewegungsinformationen ($\overset{\&}{\Psi}$, $\alpha_y$, $\delta_H$, $\omega_{FL}$, $\omega_{FR}$, $\omega_{RL}$, $\omega_{RR}$) des Kraftfahrzeugs (A) und ein zugehöriger Schwellwert (*TLC_{th}*) als Kriterium bestimmt werden, wobei dieser Schwellwert (*TLC_{th}*) zusammen mit dem Kriterium für den längsdynamischen Überholindikator (I) und dessen Schwellwert ($I_{th}$) zur Prädiktion des Beginns eines Überholvorganges bzw. eines Ausweichmanövers verwendet werden.

3. Verfahren nach Anspruch 1 oder 2
**dadurch gekennzeichnet, dass**
der Schwellwert (*TLC_{th}*) als Kriterium der Indikatorgröße (TLC) des Time-to-Line-Crossing-Wertes in Abhängigkeit des längsdynamischen Überholindikators (I) gebildet wird.

4. Verfahren nach einem der vorhergehenden Ansprüche,
**dadurch gekennzeichnet, dass**
eine Folgefahrt hinter einem bewegten Objekt (B), insbesondere einem Vorausfahrzeug (B) erkannt wird, wenn die Indikatorgröße ($\tau$) des zeitlichen Abstandsmaßes den zugehörigen Schwellwert ($\tau_{th}$) unterschreitet.

5. Verfahren nach einem der vorhergehenden Ansprüche,
**dadurch gekennzeichnet, dass**
bei einem negativen Wert der Indikatorgröße (LO, LO$_R$, LO$_L$) des lateralen Abstandes des Fahrzeugs (A) zu einer eine Gegenfahrbahn markierenden Leitlinie (L) der Fahrbahn ein Spurwechsel bzw. ein Ausscheren auf eine Nachbarspur erkannt und als Beginn eines Überholvorganges interpretiert wird.

6. Verfahren nach Anspruch 5,
**dadurch gekennzeichnet, dass**
ein Abbruch des Spurwechsels bzw. des Ausscherens erkannt wird, wenn auf der Basis der Daten der Bewegungsinformationen ($\dot{\Psi}$, $\alpha_y$, $\delta_H$, $\omega_{FL}$, $\omega_{FR}$, $\omega_{RL}$, $\omega_{RR}$) des Kraftfahrzeugs (A) und des Abstandswertes (d) des Kraftfahrzeugs (A) zu dem in Fahrtrichtung befindlichen stehenden oder bewegten Objekt (B) die Indikatorgröße (TTC$_{A,B}$) des Time-to-Collision-Wertes nicht bestimmt werden kann und/oder die Indikatorgröße (LO, LO$_R$, LO$_L$) des lateralen Abstandes des Fahrzeugs (A) zu einer eine Gegenfahrbahn markierenden Leitlinie (L) der Fahrbahn positiv wird.

7. Verfahren nach Anspruch 5,
**dadurch gekennzeichnet, dass**
bei einem negativen Wert des Abstandswertes (LO, LO$_R$, LO$_L$) des Kraftfahrzeugs (A) zu dem in Fahrtrichtung befindlichen stehenden oder bewegten Objekt (B) eine Vorbeifahrt, insbesondere eine Fortführung eines eingeleiteten Überholvorganges erkannt wird.

8. Verfahren nach Anspruch 7,
**dadurch gekennzeichnet, dass**
bei einer Bestimmbarkeit der Indikatorgröße (TTC$_{A,B}$) des Time-to-Collision-Wertes während der Vorbeifahrt an einem Vorausfahrzeug (B) ein Abbruch der Vorbeifahrt erkannt wird, wenn diese Indikatorgröße (TTC$_{A,B}$) einen zugehörigen Schwellwert (TTC$_{A,B,th}$) unterschreitet.

9. Verfahren nach einem der vorhergehenden Ansprüche,
**dadurch gekennzeichnet, dass**
ein Einscheren als einen Überholvorgang beendigendes Teilmanöver erkannt wird, wenn die Indikatorgröße (LO, LO$_R$, LO$_L$) des lateralen Abstandswerts des Fahrzeugs (A) zu einer eine Gegenfahrbahn markierenden Leitlinie (L) der Fahrbahn einen positiven Wert annimmt und die Indikatorgröße (LO, LO$_R$, LO$_L$) des Abstandswertes des Kraftfahrzeugs (A) zu dem überholten Objekt (B), insbesondere zu dem Vorausfahrzeug (B) kleiner ist als die negative Summe aus Länge ($l_{ego}$, $l_{obj}$) des Kraftfahrzeugs (A) und des überholten objekts (B).

10. Verfahren nach Anspruch 9,
**dadurch gekennzeichnet, dass**
als Indikatorgröße (LO, LO$_R$) des lateralen Abstandswertes des Fahrzeugs (A) zu einer eine Gegenfahrbahn markierenden Leitlinie (L) der Fahrbahn für die Erkennung des Einscherens der Wert des Abstandes von dem vorderen rechten Ecke des Kraftfahrzeugs (A)verwendet wird.

11. Verfahren nach einem der vorhergehenden Ansprüche,
**dadurch gekennzeichnet, dass**
als Indikatorgröße (LO, LO$_L$) des lateralen Abstandswertes des Fahrzeugs (A) zu einer eine Gegenfahrbahn markierenden Leitlinie (L) der Fahrbahn für die Erkennung eines Spurwechsels bzw. eines Ausscherens auf eine Nachbarspur der Wert des Abstandes vom vorderen linken Ecke des Kraftfahrzeugs verwendet wird.

12. Überhol- oder Ausweichassistent (1) für ein Kraftfahrzeug (A) ausgebildet zur Durchführung der Verfahrensschritte nach einem der vorhergehenden Ansprüche, umfassend

- eine Umfeldsensorik (10) zur Fahrstreifen- und Fahrbahnerkennung und zur Lokalisation von Objekten (B, C) in der Umgebung des Kraftfahrzeugs (A),
- eine Sensor-Auswerteeinheit (30) zur Erzeugung eines elektronischen Abbildes der Umgebung des Kraftfahrzeuges (A),
- eine Fahrzeugsensorik (20) zur Erfassung dynamischer Bewegungsinformationen eine Fahrmanövererkennungseinrichtung (40, 41) zur Durchführung des Verfahrens nach einem der vorhergehenden Ansprüche zur Erkennung sowohl von Teilmanovern eines Überhol- oder eines Ausweichvorganges, insbesondere einer Fölgefahrt eines Vorausfahrzeugs (B), eines Spurwechsels, einer Vorbeifahrt an einem bewegten oder stehenden Objekt (B) und eines Einscherens in den Fahrstreifen eines überholten Objekts (B) als auch zur Erkennung von Übergängen zwischen diesen Teilmanövern,
- eine Objekttracking-Einrichtung (40, 42) zum Verfolgen von erkannten Fahrzeugen (C) oder Objekten (C) des Gegenverkehrs auf der Basis der Umfeldsensorik (10), und

- eine Auswerteeinrichtung (40, 43) zur Bewertung und Ermittlung der Durchführbarkeit der erkannten Fahrmanöver und/oder Teilmanöver hinsichtlich der erkannten Fahrzeuge (C) und/oder Objekte (C) des Gegenverkehrs, zur Steuerung einer Warneinrichtung (50, 51) zur Ausgabe von Warnungen an den Fahrer bei einem prädizierten Überholvorgang oder während einem erkannten Überholvorgang, wenn das erkannte Fahrmanöver und/oder Teilmanöver als kritisch oder nicht durchführbar bewertet wird, und/oder zur Betätigung eines oder mehrerer Stellglieder (50, 52) von fahrzeugrelevanten Funktionen, insbesondere Bremse und/oder Lenkung und/oder Antriebsstrang bei einer erkannten Kollisionsgefahr mit einem erkannten Fahrzeug (C) und/oder Objekt (C) des Gegenverkehrs.

13. Überhol- oder Ausweichassistent (1) nach Anspruch 12,
**dadurch gekennzeichnet, dass**
die Auswerteinrichtung (43) zur Bestimmung einer Indikatorgröße ($TTC_{pred}$) zur Bewertung eines prädizierten oder erkannten Überholvorganges ausgebildet ist, wobei diese Indikatorgröße ($TTC_{pred}$) auf der Basis der Daten der Fahrzeugsensorik (20) und der Objekttracking-Einrichtung (42) zum prädizierten Zeitpunkt des Endes des prädizierten oder erkannten Überholvorganges als Time-To-Collision-Wert zum erkannten Fahrzeug (C) und/oder Objekt (C) des Gegenverkehrs ermittelt und ein zugehöriger Schwellwert ($TTC_{pred,th}$) bestimmt wird.

**Claims**

1. A method for automatically detecting a passing maneuver or an evasive maneuver of a motor vehicle (A), in which

   - a vehicle environment is captured and an electronic image is produced thereof,
   - the electronic image is used to detect a lane and/or a road as well as a vehicle ahead (B) and an oncoming vehicle (C) as objects (B, C) in the surroundings of the vehicle, and
   - longitudinal and transverse dynamic movement information ($\dot{\Psi}$, $\alpha_y$, $\delta_H$, $\omega_{FL}$, $\omega_{FR}$, $\omega_{RL}$, $\omega_{RR}$) of the motor vehicle (A) is determined,

   **characterized in that**

   a) the position (X) of the motor vehicle (A) is odometrically estimated on the basis of the data ($b_{Lane}$, $y_{Lane}$, $\theta$, $c_0$) from the lane and/or road detection and from the movement information ($\dot{\Psi}$, $\alpha_y$, $\delta_H$, $\omega_{FL}$, $\omega_{FR}$, $\omega_{RL}$, $\omega_{RR}$) of the motor vehicle (A),

   b) the following indicator variables are formed from the estimated position data (X) of the motor vehicle (A):

   - a lateral distance value ($LO_L$, $LO_R$) of the motor vehicle (A) from a road or line marking (L),
   - a time-to-collision value ($TTC_{A,B}$) relative to a distance (d) from the vehicle ahead (B) as an object (B) located in the driving direction, taking account of the relative acceleration ($\alpha_{rel}$),
   - a longitudinal dynamic passing or evasive indicator (I), formed from the indicator variable ($TTC_{A,B}$) of the time-to-collision value and a value corresponding to the position (FPS) of the gas pedal of the motor vehicle (A), and
   - a temporal distance dimension ($\tau$) as a quotient from the distance (d) from the vehicle ahead (B) as a stationary or moving object (B) located in the driving direction and the speed (v) of the motor vehicle (A), and

   c) threshold values ($I_{th}$, $TTC_{A,B,th}$, $\tau_{th}$) are determined for said indicator variables ($LO_L$, $LO_R$, $TTC_{A,B}$, I, $\tau$), which are used as criteria both for detecting partial maneuvers of a passing or an evasive process, in particular of a following process, a lane change, passing the stationary or moving object (B) and swinging into the lane of the passed object (B) and for detecting transitions between said partial maneuvers.

2. The method according to Claim 1,
**characterized in that**
a further indicator variable *(TLC)* is determined as the time-to-line crossing value from the data ($b_{Lane}$, $y_{Lane}$, $\theta$, $c_0$) of the road and/or road detection and the movement information ($\dot{\Psi}$, $\alpha_y$, $\delta_H$, $\omega_{FL}$, $\omega_{FR}$, $\omega_{RL}$, $\omega_{RR}$) of the motor vehicle (A) and an associated threshold value ($TLC_{th}$) is determined as a criterion, wherein said threshold value ($TLC_{th}$) together with the criterion for the longitudinal dynamic passing indicator· (I) and the threshold value ($I_{th}$) thereof are used to predict the start of a passing process or respectively an evasive maneuver.

3. The method according to Claim 1 or 2,
**characterized in that**
the threshold value *(TLC_{th})* is formed as a criterion of the indicator variable (TLC) of the time-to-line-crossing value as a function of the longitudinal dynamic passing indicator (I).

4. The method according to any one of the preceding claims,
**characterized in that**
a following process behind a moving object (B), in particular a vehicle ahead (B), is detected, if the indicator variable ($\tau$) of the temporal distance dimension falls below the associated threshold value ($\tau_{th}$).

5. The method according to any one of the preceding claims,
**characterized in that**
in the event of a negative value of the indicator variable (LO, $LO_R$, $LO_L$) of the lateral distance of the vehicle (A) from a line marking (L) of the road indicating an oncoming lane, a lane change or respectively a swinging out onto an adjacent lane is detected and is interpreted as the start of a passing process.

6. The method according to Claim 5,
**characterized in that**
a discontinuation of the lane change or respectively of the swinging out is detected, if the indicator variable · ($TTC_{A,B}$) of the time-to-collision value cannot be determined on the basis of the data from the movement information ($\dot{\Psi}$, $\alpha_y$, $\delta_H$, $\omega_{FL}$, $\omega_{FR}$, $\omega_{RL}$, $\omega_{RR}$) of the motor vehicle (A) and of the distance value (d) of the motor vehicle (A) from the stationary or moving object (B) located in the driving direction, and/or the indicator variable (LO, $LO_R$, $LO_L$) of the lateral distance of the vehicle (A) from a line marking (L) of the road indicating an oncoming lane becomes positive.

7. The method according to Claim 5,
**characterized in that**
in the event of a negative value of the distance value (LO, $LO_R$, $LO_L$) of the motor vehicle (A) from the stationary or moving object (B) located in the driving direction, a passing, in particular a continuation of an initiated passing process, is detected.

8. The method according to Claim 7,
**characterized in that**
in the event that the indicator variable ($TTC_{A,B}$) of the time-to-collision value can be determined during the passing of a vehicle ahead (B), a discontinuation of the passing is detected, if said indicator variable ($TTC_{A,B}$) falls short of an associated threshold value ($TTC_{A,B,th}$).

9. The method according to any one of the preceding claims,
**characterized in that**
a swinging in is detected as a partial maneuver terminating a passing process, if the indicator variable (LO, $LO_R$, $LO_L$) of the lateral distance value of the vehicle (A) from a line marking (L) of the road indicating an oncoming lane assumes a positive value, and the indicator variable (LO, $LO_R$, $LO_L$) of the distance value of the motor vehicle (A) from the passed object (B), in particular from the vehicle ahead (B), is smaller than the negative sum of the length ($l_{ago}, l_{obj}$) of the motor vehicle (A) and of the passed object (B).

10. The method according to Claim 9,
**characterized in that**
the value of the distance of the front right corner of the motor vehicle (A) is used as an indicator variable (LO, $LO_R$) of the lateral distance value of the vehicle (A) from a line marking (L) of the road indicating an oncoming lane for detecting the swinging back in.

11. The method according to any one of the preceding claims,
**characterized in that**
the value of the distance of the front left corner of the motor vehicle is used as an indicator variable (LO, $LO_R$) of the lateral distance value of the vehicle (A) from a line marking (L) of the road indicating an oncoming lane for detecting a lane change or respectively a swinging out into a neighboring lane.

12. A passing or evading assistant (1) for a motor vehicle (A), configured to perform the method steps according to any one of the preceding claims, comprising

- environment sensor technology (10) for lane and road detection and for locating objects (B, C) in the surroundings of the motor vehicle (A),
- a sensor evaluation unit (30) for producing an electronic image of the surroundings of the motor vehicle (A),
- vehicle sensor technology (20) for capturing dynamic movement information
- a driving maneuver detection device (40, 41) for carrying out the method according to any one of the preceding claims for detecting both partial maneuvers of a passing or evasive process, in particular of a following process of a vehicle ahead (B); a lane change, passing a moving or stationary object (B) and swinging back into the lane of a passed object (B) and for detecting transitions between said partial maneuvers,
- an object tracking device (40, 42) for tracking detected vehicles (C) or objects (C) of the oncoming traffic on the basis of the environment sensor technology (10), and
- an evaluation device (40, 43) for assessing and establishing the feasibility of the detected driving maneuvers and/or partial maneuvers with regard to the detected vehicles (C) and/or objects (C) of oncoming traffic, to control a warning device (50, 51) in order to output warnings to the driver in the case of a predicted passing process or during a detected passing process, if the detected driving maneuver and/or partial maneuver is/are assessed as being critical or not feasible, and/or to actuate one or more actuators (50, 52) of vehicle-relevant functions, in particular brake and/or steering and/or drive train, in the event of a risk of collision with a detected vehicle (C) and/or object (C) of the oncoming traffic being detected.

13. The passing or evasive assistant (1) according to Claim 12,
    **characterized in that**
    the evaluation device (43) for determining an indicator variable ($TTC_{pred}$) is configured to assess a predicted or detected passing process, wherein said indicator variable ($TTC_{pred}$) is established on the basis of the data of the vehicle sensor technology (20) and of the object tracking device (42) at the predicted time of the end of the predicted or detected passing process as the time-to-collision value with respect to the detected vehicle (C) and/or object (C) of the oncoming traffic, and an associated threshold value ($TTC_{pred,th}$) is determined.

## Revendications

1. Procédé pour la reconnaissance automatique d'une manoeuvre de dépassement ou d'une manoeuvre d'évitement d'un véhicule à moteur (A), par lequel

   - un environnement de véhicule est enregistré et une reproduction électronique de celui-ci est générée,
   - la reproduction électronique est utilisée pour la reconnaissance d'une voie de circulation et/ou d'une chaussée ainsi que d'un véhicule précédent (B) et d'un véhicule venant en sens inverse (C) comme objets (B, C) dans l'environnement de véhicule, et
   - des informations de déplacement dynamiques longitudinales et transversales ($\Psi^{\&}$, $\alpha_y$, $\delta_H$, $\omega_{FL}$, $\omega_{FR}$, $\omega_{RL}$, $\omega_{RR}$) du véhicule (A) sont déterminées,

   **caractérisé en ce que** ^^^^

   a) la position (X) du véhicule à moteur (A) est estimée de façon odométrique sur la base des données ($b_{Lane}$, $y_{Lane}$, $\theta$, $c_0$) de la reconnaissance de voie de circulation et/ou de chaussée et des informations de déplacement ($\Psi^{\&}$, $\alpha_y$, $\delta_H$, $\omega_{FL}$, $\omega_{FR}$, $\omega_{RL}$, $\omega_{RR}$) du véhicule à moteur (A),
   b) les grandeurs d'indicateurs suivantes sont formées à partir des données de position (X) estimées du véhicule à moteur (A) :

   - une valeur de distance latérale ($LO_L$, $LO_R$) du véhicule à moteur (A) par rapport à un marquage de chaussée ou de voie de circulation (L),
   - une valeur d'intervalle de temps avant collision ($TTC_{A,B}$) rapportée à une distance (d) relativement au véhicule précédent (B) en tant qu'objet (B) se trouvant dans le sens de déplacement avec prise en compte de l'accélération relative ($\alpha_{rel}$),
   - un indicateur de dépassement ou d'évitement dynamique longitudinal (I), formé à partir de la grandeur d'indicateur ($TTC_{A,B}$) de la valeur d'intervalle de temps avant collision et d'une valeur correspondant à la position de la pédale d'accélérateur (FPS) du véhicule à moteur (A), et
   - une mesure de distance temporelle ($\tau$) comme quotient à partir de la distance (d) par rapport au véhicule précédent (B) en tant qu'un objet (B) fixe ou en mouvement se trouvant dans le sens du déplacement et à la vitesse ($v$) du véhicule à moteur (A), et

   c) des valeurs seuils ($I_{th}$, $TTC_{A,B,th}$, $\tau_{th}$) sont déterminées pour ces grandeurs d'indicateurs ($LO_L$, $LO_R$, $TTC_{A,B}$, I, $\tau$) lesquelles sont utilisées comme critères aussi bien pour la reconnaissance de manoeuvres partielles d'un processus de dépassement ou d'un processus d'évitement, en particulier d'une conduite en suivi, d'un changement de voie, d'un passage auprès de l'objet (B) fixe ou en mouvement et d'une pénétration sur la voie de circulation de l'objet dépassé (B), que pour la reconnaissance de transitions entre ces manoeuvres partielles.

2. Procédé selon la revendication 1,
   **caractérisé en ce qu'**
   une grandeur d'indicateur supplémentaire ($TLC$) comme valeur d'intervalle de temps avant un franchissement de ligne à partir des données ($b_{Lane}$, $y_{Lane}$, $\theta$, $c_0$) de la reconnaissance de chaussée et/ou de chaussée et à partir des informations de mouvement ($\Psi^{\&}$, $\alpha_y$, $\delta_H$, $\omega_{FL}$, $\omega_{FR}$, $\omega_{RL}$, $\omega_{RR}$) du véhicule à moteur (A) et une valeur seuil ($TLC_{th}$) correspondante sont déterminées comme critères, cette valeur seuil ($TLC_{th}$) étant utilisée conjointement avec le critère pour l'indicateur de dépassement dynamique longitudinal (I) et sa valeur seuil ($I_{th}$) en vue de la prédiction du début d'un processus de dépassement ou d'une manoeuvre d'évitement.

3. Procédé selon la revendication 1 ou 2,
   **caractérisé en ce que**
   la valeur seuil ($TLC_{th}$) est formée comme critère de la grandeur d'indicateur (TLC) de la valeur d'intervalle de temps avant un franchissement de ligne en fonction de l'indicateur de dépassement dynamique longitudinal (I).

**4.** Procédé selon l'une des revendications précédentes,
**caractérisé en ce qu'**
une conduite en suivi derrière un objet en mouvement (B), en particulier un véhicule précédent (B), est reconnue lorsque la grandeur d'indicateur ($\tau$) de la mesure de distance temporelle dépasse négativement la valeur seuil ($\tau_{th}$) correspondante.

**5.** Procédé selon l'une des revendications précédentes,
**caractérisé en ce qu'**
un changement de voie ou une sortie sur une voie voisine sont reconnus et interprétés comme début d'un processus de dépassement en cas de valeur négative de la grandeur d'indicateur (LO, $LO_R$, $LO_L$) de la distance latérale entre le véhicule (A) et une ligne de guidage de la chaussée (L) indiquant la chaussée opposée.

**6.** Procédé selon la revendication 5,
**caractérisé en ce que**,
sur la base des données des informations de mouvement ($\Psi^{&}$, $\alpha_y$, $\delta_H$, $\omega_{FL}$, $\omega_{FR}$, $\omega_{RL}$, $\omega_{RR}$) du véhicule à moteur (A) et de la valeur de distance (d) du véhicule à moteur (A) à l'objet (B) fixe ou en mouvement dans le sens du déplacement, une interruption du changement de voie ou de la sortie est reconnue lorsque la grandeur d'indicateur ($TTC_{A,B}$) de la valeur d'intervalle de temps avant collision ne peut pas être déterminée et/ou la grandeur d'indicateur (LO, $LO_R$, $LO_L$) de la distance latérale entre le véhicule (A) et une ligne de guidage de la chaussée (L) indiquant une chaussée opposée est positive.

**7.** Procédé selon la revendication 5,
**caractérisé en ce qu'**
un passage, en particulier une poursuite d'un processus de dépassement commencé, est reconnu en cas de valeur négative de la valeur de distance (LO, $LO_R$, $LO_L$) du véhicule à moteur (A) à l'objet (B) fixe ou en mouvement se trouvant dans le sens du déplacement.

**8.** Procédé selon la revendication 7,
**caractérisé en ce qu'**
une interruption du passage est reconnue lorsque la grandeur d'indicateur ($TTC_{A,B}$) dépasse négativement une valeur seuil ($TTC_{A,B,th}$) correspondante en cas d'identifiabilité de la grandeur d'indicateur ($TTC_{A,B}$) de la valeur d'intervalle de temps avant collision pendant le passage auprès d'un véhicule précédent (B).

**9.** Procédé selon l'une des revendications précédentes,
**caractérisé en ce qu'**
une pénétration est reconnue comme une manoeuvre partielle terminant un processus de dépassement lorsque la grandeur d'indicateur (LO, $LO_R$, $LO_L$) de la valeur de distance latérale du véhicule (A) à une ligne de guidage de la chaussée (L) indiquant une chaussée opposée prend une valeur positive et la grandeur d'indicateur (LO, $LO_R$, $LO_L$) de la valeur de distance du véhicule à moteur (A) à l'objet (B) dépassé, en particulier au véhicule précédent (B), est inférieure à la somme négative de la longueur ($l_{ago}$, $l_{obj}$) du véhicule à moteur (A) et de l'objet (B) dépassé.

**10.** Procédé selon la revendication 9,
**caractérisé en ce que**
la valeur de la distance du coin avant droit du véhicule à moteur (A) est utilisée comme grandeur d'indicateur (LO, $LO_R$) de la valeur de distance latérale du véhicule (A) à une ligne de guidage de la chaussée (L) indiquant une chaussée opposée pour la reconnaissance de la pénétration.

**11.** Procédé selon l'une des revendications précédentes,
**caractérisé en ce que**
la valeur de la distance du coin avant gauche du véhicule à moteur est utilisée comme grandeur d'indicateur (LO, $LO_L$) de la valeur de distance latérale du véhicule (A) à une ligne de guidage de la chaussée (L) indiquant une chaussée opposée pour la reconnaissance d'un changement de voie ou d'une sortie sur une voie voisine.

**12.** Assistant de dépassement ou d'évitement (1) pour un véhicule à moteur (A) formé pour l'exécution des étapes de procédé selon l'une des revendications précédentes, comprenant

- un système de capteurs d'environnement (10) pour la reconnaissance de voie de circulation et de chaussée et pour la localisation d'objets (B, C) dans l'environnement du véhicule (A),
- une unité d'analyse de capteur (30) pour la génération d'une reproduction électronique de l'environnement du véhicule à moteur (A),
- un système de capteurs de véhicule (20) pour l'enregistrement des informations de mouvement dynamiques,
- une installation de reconnaissance de manoeuvres de conduite (40, 41) pour l'exécution du procédé selon l'une des revendications précédentes pour la reconnaissance aussi bien de manoeuvres partielles d'un processus de dépassement ou d'évitement, en particulier d'une conduite en suivi d'un véhicule précédent (B), d'un changement de voie, d'un passage auprès d'un objet (B) en mouvement ou fixe et d'une pénétration sur la voie de circulation d'un objet dépassé (B), que pour la reconnaissance de transitions entre ces manoeuvres partielles,

- une installation de suivi d'objet (40, 42) pour le suivi de véhicules (C) ou d'objets (C) circulant en sens inverse reconnus sur la base du système de capteurs d'environnement (10), et

- une installation d'analyse (40, 43) pour l'évaluation et la détermination de l'exécutabilité des manoeuvres de conduite et/ou des manoeuvres partielles reconnues relativement aux véhicules (C) et/ou objets (C) circulant en sens inverse, pour la commande d'une installation d'avertissement (50, 51) pour l'émission d'avertissements destinés au conducteur lors d'un processus de dépassement prédit ou pendant un processus de dépassement reconnu, lorsque la manoeuvre de conduite et/ou la manoeuvre partielle reconnues sont évaluées comme étant critiques ou non exécutables, et/ou pour l'actionnement d'un ou plusieurs actionneurs (50, 52) de fonctions concernant le véhicule, en particulier frein et/ou direction et/ou groupe motopropulseur, en cas de risque de collision reconnu avec un véhicule (C) et/ou objet (C) reconnus circulant en sens inverse.

13. Assistant de dépassement ou d'évitement (1) selon la revendication 12,
**caractérisé en ce que**
l'installation d'analyse (43) est formée pour la détermination d'une grandeur d'indicateur ($TTC_{pred}$) pour la détermination d'un procédé de dépassement prédit ou reconnu, la grandeur d'indicateur ($TTC_{pred}$) étant déterminée sur la base de données du système de capteurs de véhicule (20) et de l'installation de suivi d'objet (42) à l'instant prédit de la fin du procédé de dépassement prédit ou reconnu comme valeur d'intervalle de temps avant collision par rapport au véhicule (C) et/ou objet (C) circulant en sens inverse reconnus, et une valeur seuil ($TTC_{pred,th}$) correspondante étant déterminée.

FIG. 1

FIG.2

*Fahrstreifenerkennung*
[ $b_{Lane}$  $y_{Lane}$  $\theta$  $C_0$ ]

$$EKF$$
$$x = f(x, u)$$
$$y = h(x, u)$$

*Schätzvektor Fahrzeug / Fahrbahn*
[ $v_x$  $v_y$  $\dot{\psi}$  $x_R$  $y_R$  $\theta$  $y_{R1,MR}$  $y_{R1,ML}$  $C_0$ ]

*Fahrzeugsensorik*
[ $\dot{\psi}$  $a_y$  $\delta_H$  $\omega_{FL}$  $\omega_{FR}$  $\omega_{RR}$ ]

FIG. 3

Leitlinie L

$LO_L$

$LO_R$

A

d

B

$l_{ego}$

$l_{obj}$

FIG.4

TLC

Indikator I
1
0.8
0.6
0.4
0.2
0  0

Gas

$TTC_{A,B}$

$TTC_{A,B}$

2

4

6  0

Gas

25

50

75

100

K

$TLC < TLC_{th}$

$\wedge$

$I > I_{th}$

I

G

OTD [0,1]

FIG.5

FIG. 6

FIG.7

$$TTC_{pred} = \frac{d}{v_A + v_C}$$

FIG. 8

| Überholsituation | Verhalten Fahrer des Fahrzeugs A | | Verhalten Assistenzsystem des Fahrzeugs A |
| --- | --- | --- | --- |
| | korrekt | falsch | |
| Überholen möglich | überholt | ——— | kein Abbruch |
| Überholen kritisch | überholt nicht | | Hinweis: nicht überholen ! |
| | | schert aus | Warnung Stufe 1 |
| | schert ein | | |
| | | schert nicht ein | Warnung Stufe 2 |
| | schert ein | | |
| | | holt B ein | später Abbruch |
| | | schert ein | ( Notbremsen ) |
| Überholen unmöglich | überholt nicht | | Hinweis: nicht überholen ! |
| | | schert aus | ($a_x$ klein ) |
| | schert ein | | Warnung Stufe 2 |
| | | schert nicht ein | |
| | | | früher Abbruch |
| | | schert ein | ( moderater Bremseingriff ) |

FIG.9

FIG. 10

FIG.11

Erforderliche Zeit

$\tau_{req} = \tau_{NoSteer} + \tau_{Steer}$

Verfügbare Zeit

$\tau_{avail} = TTC_{BC} = \dfrac{d_{BC}}{v_B + v_C}$

FIG.12

Überholen gefährlich ( $TTC_{pred} < TTC_{pred, th}$ )

c )

$t$

OTD

Überholbeginn erkannt

b )

$t$

$\tau$

Information   Warnungen   Bremsen

$\tau_{req}(t)$

$\Delta \tau (t)$

$\tau_{avail}(t)$

Steer

a )

$t_1$   $t_2$   $t_3$   $t_4$   $t$

$\tau_{NoSteer} = 0$   $\tau_{NoSteer} > 0$

FIG. 13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6269308 B1
- US 6498972 B1
- DE 102004018681 A1
- JP 2009023399 A
- US 6282483 B1
- JP H05342500 A

**In der Beschreibung aufgeführte Nicht-Patentliteratur**

- **BLASCHKE, C. ; SCHMITT, J. ; FÄRBER, B.** Überholmanöver-Prädiktion über CAN-Bus-Daten. *Automobiltechnische Zeitschrift,* 2008, vol. 110 (11), 1024-1028
- **KRETSCHMER, M ; KÖNIG, L. ; NEUBECK, J. ; WIEDMANN, J.** Erkennung und Prädiktion des Fahrerverhaltens während eines Überholvorgangs. *Tagung Aktive Sicherheit durch Fahrerassistenz, Garching,* 2006, vol. 2
- A dynamic conditional random field model for joint labeling of object and scene classes. *European Conference on Computer Vision (ECCV),* 2008, 733-747